# EUROPÄISCHE PATENTSCHRIFT

(11) **EP 1 291 742 B1**
(45) Veröffentlichungstag und Bekanntmachung des Hinweises auf die Patenterteilung: **02.11.2005**
(21) Anmeldenummer: 02019047.6
(22) Anmeldetag: 27.08.2002
(51) Int. Cl.: G05B 17/02

(54) **Verfahren zur Vorbereitung einer Computersimulation einer Kraftfahrzeugelektrik**
Method for preparing a computer simulation of a vehicle electrical installation
Procédé pour préparer une simulation par ordinateur d' une installation électrique d' un véhicule

(30) Priorität: 03.09.2001 DE 10143056
(43) Veröffentlichungstag der Anmeldung: 12.03.2003
(73) Patentinhaber: Delphi Technologies, Inc., Troy, MI 48007 (US)
(72) Erfinder: Kaufmann, Klaus, Dr., 42349 Wuppertal (DE); Reinders, Thomas, 42283 Wuppertal (DE)
(74) Vertreter: Manitz, Finsterwald & Partner GbR

(56) Entgegenhaltungen:
- EP-A- 0 877 329
- DE-A- 19 852 560
- US-A- 6 085 183
- US-A- 6 154 719

## Beschreibung

Die vorliegende Erfindung betrifft ein Verfahren zur Vorbereitung einer Computersimulation einer Kraftfahrzeugelektrik.

Zur kostengünstigen Auslegung der Elektrik von Kraftfahrzeugen können Computersimulationen durchgeführt werden, die mit Hilfe entsprechender Simulationsprogramme durchgeführt werden. Bekannte Simulationswerkzeuge zur Durchführung solcher Simulationen basieren auf Systemen, die ursprünglich für die Simulation elektronischer Schaltungen entworfen wurden. Diese Systeme bestehen gewöhnlich aus einem Schaltplaneingabewerkzeug, dem eigentlichen Simulationsprogramm und einem Werkzeug zur Visualisierung der Simulationsergebnisse. Das Schaltplaneingabewerkzeug dient neben der Erstellung von Schaltplänen auch der Erzeugung der von dem Simulationsprogramm benötigten Netzlisten- und Steuerdateien. Mittels der bekannten Schaltplaneingabewerkzeugs werden graphische Schaltpläne gezeichnet, welche die Symbole für die in der elektronischen bzw. elektrischen Schaltung enthaltenen physikalischen Bauelemente und die Verbindungen zwischen den Anschlüssen der physikalischen Bauelemente darstellen. Für die Bauteilsymbole stehen Bibliotheken zur Verfügung. Jedem Symbol ist ein Simulationsmodell zugeordnet, das entweder ein reales physikalisches Bauelement, z. B. einen ganz bestimmten Transistor, oder einen Bauelementtyp, z. B. ein MOSFET, representieren kann. In dem letzteren Fall müssen noch Parameter eingegeben werden, welche das Modell genau spezifizieren. Kraftfahrzeugelektriken werden bei diesen Simulationswerkzeugen somit direkt durch die an Symbole gebundenen physikalischen Modelle nachgebildet.

Diese bekannten Simulationssysteme weisen jedoch eine Reihe von Nachteilen auf. So ist zur Durchführung von Simulationen ganzer Fahrzeugelektriken ein erheblicher Aufwand für die Eingabe der notwendigen Daten in die Schaltpläne erforderlich. Änderungen an einer Fahrzeugelektrik können zu sehr arbeitsaufwendigen Veränderungen an den Schaltplänen führen, die insbesondere für größere Kraftfahrzeug-Elektriken eher unübersichtlich sind.

Eine Validierung eines Entwurfs einer Kraftfahrzeugelektrik mit diesen Werkzeugen ist mit einem vernünftigen Zeitaufwand nicht möglich, da die Schalterstellungen sämtlicher Schalter der Kraftfahrzeugelektrik entsprechend den zahlreichen zu überprüfenden Fahrzeugzuständen manuell gesetzt werden müssen. Daher sind mit diesen Werkzeugen letztendlich nur Überprüfungen einzelner, überschaubarer Fragestellungen möglich.

Schließlich sind die für die Entwicklung von Fahrzeugelektriken angefertigten Schaltpläne nicht unmittelbar für die Simulation geeignet, da wichtige, für die Simulation benötigte Informationen in diese nicht eingetragen sind und speziell für die Simulation nachgetragen werden müssen.

Bedingt durch die Komplexität der Schaltpläne und der an den realen physikalischen Bauelementen orientierten Schaltplaneingabewerkzeuge sind Änderungen nur durch Spezialisten unter großem Aufwand möglich, was die Verwendung von Computersimulationen zum Entwurf von Kraftfahrzeugelektriken deutlich einschränkt.

Es ist Aufgabe der vorliegenden Erfindung, ein Verfahren zur Vorbereitung einer Computersimulation einer Kraftfahrzeugelektrik unter Verwendung eines Simulationsprogramms bereitzustellen, das eine einfache Erstellung von Eingabe- und/oder Steuerdateien für das Simulationsprogramm erlaubt.

Die Aufgabe wird gelöst durch ein Verfahren mit den Merkmalen des Anspruchs 1.

Bei dem erfindungsgemäßen Verfahren zur Vorbereitung einer Computersimulation einer Kraftfahrzeugelektrik, zu der ein entsprechendes Simulationsprogramm verwendet wird, sind logische Bauelemente definiert, die durch eine vorgegebene Funktion definierte Bauelemente einer Kraftfahrzeugelektrik darstellen. Durch die allein durch ihre Funktion in der Kraftfahrzeugelektrik definierten logischen Bauelemente findet also eine weitgehende Abstraktion von realen, physikalischen Bauelementen statt. Die logischen Bauelemente weisen jedoch eine vorgegebene Anzahl von Anschlüssen auf, die der Anzahl von Anschlüssen realer Bauelemente der gleichen Funktion entsprechen. Weiterhin ist jedem logischen Bauelement eine Menge von verfügbaren Modellen zugeordnet, die mindestens ein parametrisierbares Modell und/oder ein bauelementspezifisches Modell zur Beschreibung des Verhaltens eines realen, die Funktion des logischen Bauelements erfüllenden Bauelements enthält, wobei jedes der parametrisierbaren Modelle Modellparameter aufweist, denen Werte zuweisbar sind.

Für mindestens eines der parametrisierbaren Modelle ist mindestens ein Parameterwertsatz bereitgestellt, um das Verhalten eines realen, die Funktion eines der logischen Bauelemente erfüllenden Bauelements mit dem parametrisierbaren Modell und dem Parameterwertsatz zu beschreiben. Damit ist für jedes logische Bauelement mindestens ein Modell verfügbar, bei dem es sich um ein bauelementspezifisches Modell handeln kann, das zur Beschreibung des Verhaltens eines realen Bauelements keine weitere Parametrisierung benötigt, oder um ein parametrisierbares Modell, das zusammen mit dem entsprechenden Parameterwertsatz ebenfalls das Verhalten eines realen Bauelements beschreibt. Unter "Beschreibung" wird hierbei verstanden, daß das Modell das Verhalten des realen Bauelements in einer ggf. nur sehr einfachen, aber dem Simulationsziel entsprechenden Näherung wiedergibt.

Bei dem erfindungsgemäßen Verfahren wird ein logisches Fahrzeugmodell der zu simulierenden Kraftfahrzeugelektrik bereitgestellt, in dem in der zu simulierenden Kraftfahrzeugelektrik enthaltene logische Bauelemente enthalten und über ihre Anschlüsse einander zugeordnet sind. Unter einem "logischen Fahrzeugmodell" im Sinne der Erfindung wird also eine Anzahl von logischen Bauelementen verstanden, deren Anschlüsse so einander zugeordnet sind, daß die Verbindungen zwischen logischen Bauelementen über deren Anschlüsse den Verbindungen der Bauelemente in der zu simulierenden Kraftfahrzeugelektrik entsprechen.

Für jedes logische Bauelement des logischen Fahrzeugmodells wird dann ein in der entsprechenden Menge der verfügbaren Modelle enthaltenes, einem realen, die Funktion des logischen Bauelements erfüllenden Bauelement entsprechendes parametrisierbares Modell und ein entsprechender Parameterwertsatz oder ein in der entsprechenden Menge der Modelle enthaltenes bauelementspezifisches Modell zur Beschreibung des realen, die Funktion des logischen Bauelements erfüllenden Bauelements zur Erstellung eines Gesamtmodells bestimmt. Hierdurch wird das logische Fahrzeugmodell in Richtung auf ein mehr physikalisches Fahrzeugmodell hin spezifiziert, so daß ein Gesamtmodell einer konkreten Fahrzeugelektrik erstellbar ist.

Parameterwertsätze und/oder bauelementspezifische Modelle für konkrete, reale Bauelemente können aus verschiedenen Quellen gewonnen werden. So können Messungen an Fahrzeugen einer Vorgängerserie oder Prototypen der zu entwickelnden Fahrzeugserie verwendet werden. Gegebenenfalls können für erste Simulationen auch Daten ähnlicher Fahrzeuge bzw. darin enthaltener realer Bauelemente benutzt werden. Andere Quellen sind Datenblätter von realen Bauelementen oder Normen für diese.

Die Modelle können insbesondere in Modellbibliotheken abgelegt sein, aus denen ein Benutzer dann geeignete Modelle selektieren kann.

Unter Verwendung der Zuordnung der Anschlüsse der logischen Bauelemente des logischen Fahrzeugmodells zueinander, der bestimmten parametrisierbaren Modelle und der bestimmten Parameterwertsätze und/oder der bestimmten bauelementspezifischen Modelle werden dann ein Gesamtmodell der Kraftfahrzeugelektrik und für dieses Eingabe- und/oder Steuerdateien für ein gegebenes Simulationsprogramm erstellt. Bei den erstellten Eingabedateien kann es sich insbesondere um Netzlistendateien von Schaltplänen handeln.

Im Gegensatz zu den bei bekannten Simulationswerkzeugen verwendeten Verfahren wird bei dem erfindungsgemäßen Verfahren, das bevorzugt computergestützt ausgeführt wird, das Modell ausgehend von einer Beschreibung auf einer Funktionsebene stufenweise weiter auf eine physikalische Ebene hin konkretisiert, was zum einen eine einfache Kontrolle der Verbindungen der logischen Bauelemente untereinander bereits auf der Ebene des logischen Fahrzeugmodells und zum anderen eine sehr einfache und übersichtliche Aufstellung des Fahrzeugmodells erlaubt. Durch die Bestimmung von Modellen für reale Bauelemente in einem späteren Schritt wird für einen Benutzer die Übersichtlichkeit des Aufbaus eines Gesamtmodells wesentlich erhöht. Weiterhin kann der Benutzer leichter und flexibler Modelle austauschen, was eine Verfeinerung des Modells mit zunehmendem Wissensstand im Laufe eines Entwicklungsprojekts erleichtert. Darüber hinaus erfolgt die allein aufgrund der Anzahl der Bauelemente unübersichtliche Erstellung von Eingabe- und/ oder Steuerdateien bei dem erfindungsgemäßen, in der Regel computergestützten Verfahren, automatisch, so daß nicht nur der Arbeitsaufwand zur Erstellung der Eingabe- und/oder Steuerdateien reduziert sondern auch das Risiko von Fehlern wesentlich verringert wird.

Weiterbildungen und bevorzugte Ausführungsformen der Erfindung sind in der Beschreibung, den Zeichnungen und den Ansprüchen beschrieben.

Die Bereitstellung eines logischen Fahrzeugmodells kann auf unterschiedliche Art und Weise erfolgen.

So kann das logische Fahrzeugmodell durch Angabe einzelner logischer Bauelemente und ihrer Verknüpfungen, insbesondere über ihre Anschlüsse, bereitgestellt werden, was bei Durchführung des Verfahrens auf einem Computer in der Regel interaktiv geschieht. Besonders bevorzugt wird zur Angabe mindestens eines in der zu simulierenden Kraftfahrzeugelektrik enthaltenen logischen Bauelements eine Liste der verfügbaren logischen Bauelemente wenigstens teilweise auf einem Bildschirm eines zur Durchführung des Verfahrens benutzten Datenverarbeitungssystems angezeigt und eine Auswahl eines Benutzers eingelesen. Vorzugsweise handelt es sich bei der Liste um eine vorgefertigte, und besonders bevorzugt auch möglichst vollständige, Liste von logischen Bauelementen, die erfahrungsgemäß in Kraftfahrzeugen vorkommen können. Der Benutzer kann dann ein logisches Bauelement aus einer Bibliothek von logischen Bauelementen auswählen. Hierdurch wird eine sehr einfache, und bei Verwendung der Auswahl aus einer Liste auch mit einer sehr geringen Fehlerwahrscheinlichkeit behaftete Eingabemöglichkeit geschaffen.

Zur Angabe wenigstens eines logischen Bauelements können jedoch auch entsprechende Daten aus einer Datei eingelesen werden, was insbesondere die Wiederverwendung von Gruppen einander zugeordneter logischer Bauelemente aus einer früheren Simulation erlaubt.

Besonders bevorzugt wird das logische Fahrzeugmodell aus einer Datei eingelesen, so daß für einen Fahrzeugtyp allein durch die nachfolgende Parametrisierung sehr schnell für verschiedene reale Bauteile Gesamtmodelle für die Kraftfahrzeugelektrik erstellbar und entsprechende Eingabe- und/oder Steuerdateien erstellbar sind. Hierdurch wird insbesondere die Erstellung von Gesamtmodellen für eine gesamte Kraftfahrzeugelektrik wesentlich erleichtert, da auf einem bereits erstellten logischen Fahrzeugmodell, das auf seine Fehlerfreiheit hin möglicherweise schon überprüft wurde, aufgebaut werden kann und nur noch eine wesentlich einfacher zu überprüfende Bestimmung von entsprechenden Modellen notwendig ist. Weiterhin kann ein neues logisches Fahrzeugmodell dann einfach durch Einlesen eines bereits erstellten logischen Fahrzeugmodells erfolgen, das nur noch ergänzt oder geändert werden muß. Solche Dateien mit logischen Fahrzeugmodellen können insbesondere dadurch erhalten werden, daß nach den soeben geschilderten Verfahren zur Angabe von logischen Bauelementen ein logisches Fahrzeugmodell erstellt und dann in einer Datei gespeichert wird.

Bevorzugt ist mindestens einem logischen Bauelement eine Standardbezeichnung und/oder ein Symbol zugeordnet. Die Angabe des logischen Bauelements bei der Erstellung des logischen Fahrzeugmodells und/oder die Kennzeichnung in dem logischen Fahrzeugmodell kann dann über die Standardbezeichnung oder das Symbol erfolgen. Bei dem Symbol kann es sich insbesondere um ein Icon einer graphischen Benutzerschnittstelle eines Datenverarbeitungsprogramms zur Durchführung des Verfahrens handeln. Durch die Verbindung solcher Standardbezeichnungen ist es sehr leicht möglich auch wenig geübten Benutzern eine intuitive, sichere und fehlerfreie Bereitstellung von logischen Fahrzeugmodellen zu ermöglichen. Die Standardbezeichnungen erlauben darüberhinaus die weltweite Verwendung von definierten Modellen von Kraftfahrzeugelektriken, da der normierte Name, im Gegensatz zu landesspezifischen oder herstellerspezifischen Bezeichnungen, weltweit verstanden wird. Auch versteht ein spezialisierter Simulationsingenieur direkt die Eingaben von Entwicklungsingenieuren, die gewöhnlich nur kundenspezifische Bezeichnungen verwenden.

Die Bestimmung der Modelle, die zur Erstellung eines Gesamtmodells verwendet werden, kann auf unterschiedliche Weise erfolgen.

Bei einer bevorzugten Ausführungsform des erfindungsgemäßen Verfahrens werden mindestens einem logischen Bauelement des logischen Fahrzeugmodells mindestens zwei Modelle aus der Menge der verfügbaren Modelle zunächst zugewiesen. In einem späteren Schritt wird dann aus der Menge der zugewiesenen Modelle ein Modell zur Erstellung eines Gesamtmodells und der entsprechenden Eingabe- und/oder Steuerdateien bestimmt. Hierdurch wird es möglich, ein logisches Fahrzeugmodell in Richtung auf reale Bauelemente hin weiter zu spezifizieren, das logische Fahrzeugmodell zusammen mit den zugewiesenen Modellen z. B. abzuspeichern, und erst in einem späteren Verfahrensschritt aus der Menge der zugewiesenen Modelle nach dann vorgegebenen Kriterien ein Modell zu bestimmen. Bei den Modellen kann es sich hierbei insbesondere um parametrisierbare Modelle oder bauelementspezifische Modelle handeln. Um einen einheitlichen Verfahrensablauf zu erhalten, kann bevorzugt grundsätzlich eine Zuweisung erfolgen, wobei gegebenenfalls einem logischen Bauelement nur ein Modell zugewiesen wird.

Bevorzugt wird zur Bestimmung oder Zuweisung eines Modells mindestens eines logischen Bauelements in dem logischen Fahrzeugmodell eine Liste der für dieses logische Bauelement verfügbaren Modelle wenigstens teilweise auf einem Bildschirm eines zur Durchführung des Verfahrens benutzten Datenverarbeitungssystems angezeigt und eine Auswahl eines Benutzers eingelesen, was eine interaktive, einfache und zuverlässige Zuweisung bzw. Bestimmung eines Modells erlaubt. Insbesondere können in einer Modellbibliothek verfügbaren Modelle verwendet werden.

Zur Bestimmung oder Zuweisung mindestens eines Modells mindestens eines logischen Bauelements in dem logischen Fahrzeugmodell können jedoch auch entsprechende Daten aus einer Datei eingelesen werden. Hierbei kann es sich insbesondere um eine Datei handeln, in der auch das logische Fahrzeugmodell abgespeichert ist, so daß sehr einfach ein bereits vollständig auf reale Bauelemente hin spezifiziertes logisches Fahrzeugmodell bereitgestellt werden kann. Weiterhin können auch Daten aus Dateien, die für andere Schaltplaneingabewerkzeuge oder Simulationsprogramme erstellt sind, importiert werden. Auch ist eine einfache Referenzierung auf solche Dateien möglich.

Bevorzugt ist mindestens einem Modell eine Standardbezeichnung und/ oder ein Symbol als Attribut zugeordnet, wobei die Zuweisung oder Bestimmung des Modells über diese Standardbezeichnung oder das Symbol erfolgt. Hierdurch wird eine besonders einfache Zuweisung oder Bestimmung des Modells auf einem Bildschirm, bei dem das Symbol als Icon fungiert, oder über die Standardbezeichnung auch in einer Datei ermöglicht.

Bei der Bestimmung oder Zuweisung der Modelle kann weiterhin berücksichtigt werden, daß die Komplexität der Modelle für ein gegebenes Bauteil stark vom Typ der Simulation abhängt. Unter dem Typ einer Simulation wird hier unter anderem eine Klasse von Simulationen verstanden, bei denen gleiche Eingangsgrößen, bestimmte Eigenschaften oder Typen von Eingangsgrößen und/oder bestimmte physikalische Effekte berücksichtigt werden. Insbesondere können beispielsweise rein stationäre Simulationen, bei denen keine Zeitabhängigkeiten berücksichtigt werden, oder zeitabhängige Simulationen, bei denen auch die Zeitabhängigkeit von Größen eine Rolle spielt, verwendet werden. Ein Simulationsmodell für die Gleichstromsimulation ist dabei weniger komplex als ein beschreibendes Modell für zeitabhängige Simulationen, bei denen beispielsweise Einschaltvorgänge berücksichtigt werden. Auch können rein elektrische Simulationen, bei denen nur Ströme und/oder Spannungen berücksichtigt werden, oder komplexere Simulationen, bei denen beispielsweise auch Temperatureffekte eingeschlossen sind, durchgeführt werden. Dementsprechend ist es bevorzugt, daß bei der Zuweisung oder der Bestimmung der Modelle ein Simulationstyp berücksichtigt wird. Hierzu kann insbesondere jedem der Modelle ein Attribut zugeordnet werden, das den Simulationstyp beschreibt und anhand dessen der Typ bei der Zuweisung oder Bestimmung der Modelle automatisch berücksichtigt werden kann. Auch hierdurch werden Fehleingaben unerfahrener Benutzer weitgehend ausgeschlossen, was diesen die Bedienung auch wesentlich erleichtert.

Die Arten von Modellen, insbesondere bei bauelementspezifischen Modellen, können nicht nur von dem Simulationstyp abhängen, sondern auch von dem Typ des Simulationsprogramms, das zur Simulation später verwendet wird. Daher wird bevorzugt bei der Zuweisung oder Bestimmung des Modells auch der Typ des Simulationsprogramms berücksichtigt. Hierzu kann jedem der Modelle ein entsprechendes Attribut zugeordnet sein, das bei der Zuweisung oder Bestimmung des Modells berücksichtigt wird. Auch hier ergeben sich für unerfahrene Benutzer erhebliche Vorteile, da diese nicht wissen müssen, welche Modelle für ein gegebenes Simulationsprogramm verwendbar sind.

In einer weiteren bevorzugten Ausführungsform erfolgt die Zuweisung oder insbesondere die Bestimmung eines Modells für ein bestimmtes logisches Bauelement automatisch. Insbesondere kann einem logischen Bauelement ein Default-Modell zugewiesen sein, das grundsätzlich zugewiesen ist, wodurch die Mindesteingaben, die ein Benutzer vornehmen muß, deutlich reduziert sind.

Für jedes bestimmte parametrisierbare Modell muß zur vollen Spezifikation für ein reales Bauelement auch ein Parameterwertsatz bestimmt werden. Bevorzugt wird dazu jedem zugewiesenen oder bestimmten parametrisierbaren Modell mindestens ein Parameterwertsatz zugewiesen, wobei in einem späteren Schritt von den zugewiesenen Parameterwertsätzen einer bestimmt wird. Dies ermöglicht es, wie bei der Zuweisung von Modellen, zunächst das logische Fahrzeugmodell in Bezug auf die realen Bauteile weitestgehend zu spezifizieren, um dann erst später, z. B. durch Angabe eines Simulationstyps und/ oder eines Simulationsprogramms, die Parameterwertsätze zu bestimmen. Auch hier ist es bevorzugt, daß zur Bestimmung oder Zuweisung eines Parameterwertsatzes eine Liste der verfügbaren Parameterwertsätze wenigstens teilweise angezeigt und eine Auswahl eines Benutzers eingelesen wird.

Nach einer anderen bevorzugten Ausführungsform können jedoch zur Bestimmung oder Zuweisung wenigstens eines Parameterwertsatzes entsprechende Daten aus einer Datei eingelesen werden. Insbesondere kann es sich dabei um eine Datei handeln, in der das logische Fahrzeugmodell sowie die den logischen Bauelementen in dem logischen Fahrzeug zugewiesenen Modelle enthalten sind. Zur Erstellung einer solchen Datei kann nach der letzten Zuweisung eines Parameterwertsatzes das logische Modell zusammen mit den zugewiesenen Modellen und den zugewiesenen Parameterwertsätzen abgespeichert werden.

Sowohl zur Zuweisung als auch zur Bestimmung von Parameterwertsätzen ist es bevorzugt, daß jedem der Parameterwertsätze mindestens ein Attribut zugeordnet ist, das zur Zuweisung oder zur Bestimmung des Parameterwertsatzes verwendet wird. Insbesondere kann bei Zuweisung eines Parameterwertsatzes durch Auswahl aus einer Liste die Länge dieser Liste durch Verwendung der Attribute beträchtlich verkürzt werden.

So ist bevorzugt jedem logischen Bauelement eine Bezeichnung zugeordnet, die als Attribut verwendet wird. Dadurch sind nur für das logische Bauelement geeignete Parameterwertsätze zuweisbar oder bestimmbar, was dem Benutzer die Auswahl wesentlich erleichtert.

Weiterhin ist bevorzugt jedem parametrisierbaren Modell eine Bezeichnung zugeordnet, die als Attribut verwendbar ist. Auch hierdurch kann leicht sichergestellt werden, daß bei der Zuweisung oder Bestimmung von Parameterwertsätzen nur solche Parameterwertsätze berücksichtigt werden, die zur Verwendung mit einem entsprechenden parametrisierbaren Modell verwendbar sind.

Weiterhin kann bevorzugt als Attribut für einen Parameterwertsatz die Bezeichnung eines realen, die Funktion des logischen Bauelements erfüllenden Bauelements verwendet werden. Insbesondere in Kombination mit einem ein parametrisierbares Modell bezeichnenden Attribut kann so für den Benutzer die Auswahl der Parameterwertsätze erheblich erleichtert werden. Besonders vorteilhaft sind in einer Datei oder Datenbank für jedes reale Bauelement entsprechende Parameterwertsätze abgespeichert, so daß selbst ein unerfahrener Benutzer nur durch Benutzung der Bezeichnung des realen Bauelements den richtigen Parameterwertsatz auswählen kann.

Weiterhin kann als Attribut die Bezeichnung eines Simulationsprogramms verwendet werden, so daß bei Angabe des Simulationsprogramms aus einer Menge zugewiesener Parameterwertsätze der entsprechende Parameterwertsatz ausgewählt werden kann.

Weiterhin bevorzugt wird als Attribut die Bezeichnung eines Simulationstyps verwendet, um bei der Zuweisung oder Bestimmung des Parameterwertsatzes die richtige Zuordnung zu einem Modell zu erleichtern.

Um Eingabefehler zu vermeiden und auch einem weniger versierten Benutzer die Spezifikation von Modellen zu erleichtern, ist es bevorzugt, für mindestens ein logisches Bauelement und ein entsprechendes, parametrisierbares Modell einen Default-Parameterwertsatz vorgegeben, der automatisch zugewiesen oder bestimmt wird, wenn keine andere Zuweisung oder Bestimmung erfolgt.

Bevorzugt wird, insbesondere in dem Fall, daß zunächst eine Zuweisung von Parameterwertsätzen erfolgt ist, ein Parameterwertsatz automatisch unter Verwendung mehrerer Attribute bestimmt. Besonders bei Verwendung von Attributen, die der Bezeichnung eines Simulationsprogramms oder eines Simulationstyps entsprechen, kann so für einen Benutzer die Spezifikation eines Modells erheblich vereinfacht werden.

In einer anderen Weiterbildung wird in dem Fall, daß für ein zugewiesenes oder bestimmtes Modell kein Parameterwertsatz bei der automatischen Bestimmung gefunden wird, ein bauelementspezifisches Modell verwendet, sofern ein solches verfügbar ist.

Statt parametrisierbarer Modelle und entsprechender Parameterwertsätze können auch bauelementspezifische Modelle verwendet werden. Deren Zuweisung oder Bestimmung erfolgt grundsätzlich wie die der parametrisierbaren Modelle.

Sind sowohl parametrisierbare Modelle mit entsprechenden Parameterwertsätzen als auch bauelementspezifische Modelle verfügbar, wird bevorzugt ein bauelementspezifisches Modell zugewiesen und insbesondere bestimmt, da dieses in der Regel eine angemessenere Beschreibung des Bauelementverhaltens liefert.

Bevorzugt ist jedem bauelementspezifischen Modell mindestens ein Attribut zugeordnet, das zur Zuweisung oder Bestimmung des Modells verwendet wird. Auch hier ergeben sich die gleichen Vorteile wie bei der Verwendung von Attributen bei den Parameterwertsätzen, insbesondere wird bei Verwendung von Listen zur Zuweisung oder Bestimmung von bauelementspezifischen Modellen durch Verwendung von Attributen die Liste stark verkürzt. Darüber hinaus wird die Zuweisung und insbesondere eine Bestimmung des Modells erheblich erleichtert.

Besonders bevorzugt ist jedem logischen Bauelement eine Bezeichnung, insbesondere ein standardisierter Name zugeordnet, die als Attribut für das bauelementspezifische Modell verwendet wird. Ebenso kann bevorzugt als Attribut eine Bezeichnung eines realen, durch das bauelementspezifische Modell zu beschreibenden Bauelements verwendet werden, was wiederum dem seltener mit dem Verfahren arbeitenden Benutzer eine erhebliche Erleichterung bringt. Weiterhin können bevorzugt als Attribute für das bauelementspezifische Modell die Bezeichnung eines Simulationsprogramms und/oder die Bezeichnung eines Simulationstyps verwendet werden.

Bevorzugt ist die bei den Parameterwertsätzen für mindestens ein logisches Bauelement ein bauelementspezifisches Default-Modell vorgegeben, das automatisch zugewiesen oder bestimmt wird, wenn keine andere Zuweisung oder Bestimmung erfolgt. Hierdurch kann sichergestellt werden, daß bei Verwendung des logischen Bauelements immer eine Spezifikation im Hinblick auf ein reales Bauelement erfolgt.

Besonders bevorzugt wird ein bauelementspezifisches Modell automatisch unter Verwendung mehrerer Attribute bestimmt, was insbesondere in dem Fall besonders sinnvoll ist, daß zuvor einem logischen Bauelement bauelementspezifische Modelle nur zugewiesen wurden.

Bauelemente in einer Kraftfahrzeugelektrik weisen in der Regel nicht nur einen Funktions- bzw. Betriebszustand auf, sondern mehrere. Bei der Simulation sind diese Funktions- bzw. Betriebszustände entsprechend zu berücksichtigen. Bevorzugt sind daher wenigstens einem der logischen Bauelemente mindestens zwei logische Bauteilzustände zugeordnet, die jeweils einem Betriebszustand des logischen Bauelements entsprechen. Bei dem erfindungsgemäßen Verfahren wird nach Bestimmung dieses logischen Bauelements dessen logischer Bauteilzustand bestimmt. Bei der Bestimmung des Modells für dieses logische Bauelement wird dann ein dem logischen Betriebszustand entsprechendes bauelementspezifisches Modell oder ein parametrisierbares Modell und ein dem logischen Betriebsstand entsprechender Parameterwertsatz für das bestimmte parametrisierbare Modell bestimmt. Hierdurch ist es also möglich, bereits auf der nichtphysikalischen Ebene, d. h. auf der Ebene des logischen Fahrzeugmodells, Betriebszustände einzelner Verbraucher festzulegen, ohne die Modelle bzw. die Parameterwertsätze schon spezifizieren zu müssen.

Besonders bevorzugt werden zur Bestimmung des logischen Bauteilzustands und des Modells für das bestimmte logische Bauelement dem logischen Bauelement logische Bauteilzustände und Modelle zugewiesen, wobei für jeden der logischen Bauteilzustände mindestens ein dem logischen Bauteilzustand entsprechendes bauelementspezifisches Modell oder mindestens ein parametrisierbares Modell und für das parametrisierbare Modell mindestens ein dem logischen Bauteilzustand entsprechender Parameterwertsatz zugewiesen werden. In einem späteren Schritt wird einer der logischen Bauteilzustände bestimmt und auf dieser Basis aus den zugewiesenen Modellen und Parameterwertsätzen ein bauelementspezifisches Modell oder ein parametrisierbares Modell und ein entsprechender Parameterwertsatz bestimmt. Diese Art der Bestimmung ermöglicht es, bei einem logischen Fahrzeugmodell, dessen logischen Bauelementen bereits realen Bauelementen entsprechende Modelle, gegebenenfalls mit entsprechenden Parameterwertsätzen zugewiesen wurden, nur durch einfache, auch für wenig erfahrene Benutzer leicht durchführbare Änderungen der logischen Bauteilzustände eine in dem logischen Fahrzeugmodell dargestellte Kraftfahrzeugelektrik ohne eine Neuparametrisierung vorbereiten zu können.

Bevorzugt ist für mindestens ein logisches Bauelement ein logischer Default-Bauteilzustand vorgegeben, der automatisch bestimmt oder zugewiesen wird, wenn keine andere Bestimmung erfolgt. Durch diese Vorgabe kann sichergestellt werden, daß bei der Vorbereitung einer Simulation einem logischen Bauelement immer ein logischer Bauteilzustand zugeordnet ist, was die Benutzung des Verfahrens erheblich erleichtern kann.

Einem logischen Bauteilzustand ist bevorzugt eine Bezeichnung zugeordnet, die als Attribut für einen Parameterwertsatz oder ein bauelemenetspezifisches Modell verwendet wird. Dies ermöglicht es zum einen, bei der Zuweisung von Parameterwertsätzen und/oder bauelementspezifischen Modellen durch Auswahl aus vorgegebenen Listen nur noch die für den logischen Bauteilzustand relevanten Parameterwertsätze anzuzeigen, was die Auswahl wesentlich übersichtlicher und damit einfacher gestaltet. Weiterhin ermöglicht es diese Weiterbildung, Parameterwertsätze oder bauelementspezifische Modelle unter Verwendung der Bezeichnung als Attribut automatisch zu bestimmen, was insbesondere bei vorheriger Zuweisung von Parameterwertsätzen und/oder bauelementspezifischen Modellen Fehler zu vermeiden hilft und einen schnelleren Aufbau des Gesamtmodells ermöglicht.

Um eine automatische Bestimmung von Modellen ohne das Auftreten von Fehlern gewährleisten zu können, wird bei Verwendung von Zuweisungen von logischen Bauteilzuständen zu logischen Bauelementen bevorzugt für jedes logische Bauelement des logischen Fahrzeugmodells für alle zugewiesenen logischen Bauteilzustände geprüft, ob mindestens ein bauelementspezifisches Modell oder ein parametrisierbares Modell und ein entsprechender Parameterwertsatz dafür definiert sind.

Obwohl die Verwendung logischer Bauteilzustände bereits die Benutzung des Verfahrens erheblich erleichtert, müßten diese für einen gegebenen Zustand einer zu simulierenden Kraftfahrzeugelektrik einzeln bestimmt werden, was zum einen sehr arbeitsaufwendig und zum anderen aufgrund der großen Anzahl möglicher Kombinationen logischer Bauteilzustände auch fehleranfällig ist. Bevorzugt sind daher logische Funktionszustände definiert, die einem Betriebszustand mindestens einer Gruppe zusammenwirkender logischer Bauelemente des logischen Fahrzeugmodells entsprechen und denen entsprechende logische Bauelemente und logische Bauteilzustände zugeordnet sind. Nach Bereitstellung des Fahrzeugmodells und gegebenenfalls der Zuweisung von Modellen und Parameterwertsätzen wird dann einer der logischen Funktionszustände bestimmt. Nach Bestimmung des logischen Funktionszustandes werden darauf die entsprechenden logischen Bauteilzustände der zugehörigen logischen Bauelemente bestimmt. Hierdurch wird es dem Benutzer des Verfahrens ermöglicht, allein durch die einfache Bestimmung eines logischen Funktionszustands für eine ganze Gruppe zusammenwirkender logischer Bauelemente des logischen Fahrzeugmodells entsprechende logische Bauteilzustände zu bestimmen, was die Wahrscheinlichkeit von Fehlern bei der Bestimmung von Bauteilzuständen deutlich verringert.

Bevorzugt werden die logischen Funktionszustände für ein logisches Fahrzeugmodell beispielsweise in einer Datenbank abgespeichert, so daß bei der Zuordnung von logischen Bauteilzuständen zu einem logischen Funktionszustand keine Fehler bei der Benutzung durch unerfahrene Benutzer auftreten können. Ein besonderer Vorteil dieser Weiterbildung des erfindungsgemäßen Verfahrens liegt darin, daß die Zuordnung von Funktionszuständen bereits auf der logischen Ebene erfolgt, wodurch nicht nur eine hohe Übersichtlichkeit gewährleistet ist, sondern auch mit nur einer Zuordnung auf der logischen Ebene für eine große Anzahl von verschiedenen Kraftfahrzeugelektriken, die mit verschiedenen realen Bauelementen ein logisches Fahrzeugmodell realisieren, schnell und einfach Gesamtmodelle aufbaubar sind. Zur Bestimmung der logischen Funktionszustände können entsprechende Daten aus einer Datei, insbesondere einer Datenbank, eingelesen werden, wodurch die Bestimmung wesentlich erleichtert wird.

Grundsätzlich ist es möglich, daß ein logisches Bauteil zu mehreren Gruppen zusammenwirkender logischer Bauelemente gehört, denen entsprechende logische Funktionszustände entsprechen. In einem solchen Fall kann es dazu kommen, daß die Bestimmung zweier logischer Funktionszustände bedeuten würde, daß einem logischen Bauelement zwei verschiedene logische Bauteilzustände zuzuordnen wären. Daher ist es bevorzugt, daß für alle bestimmten logischen Funktionszustände geprüft wird, ob die entsprechenden bestimmten logischen Bauteilzustände miteinander vereinbar sind.

Aufbauend auf den logischen Funktionszuständen können bei einer weiteren bevorzugten Weiterbildung des erfindungsgemäßen Verfahrens Kombinationen logischer Zustände zu übergeordneten logischen Zuständen oder auch Simulationsszenarien kombiniert werden, was wiederum die Übersichtlichkeit des Modellaufbaus bei Verwendung des erfindungsgemäßen Verfahrens wesentlich erhöht. Darüber hinaus kann durch eine einmalige Festlegung von Simulationsszenarien, übergeordneten logischen Zuständen und/oder logischen Zuständen und eine eingehende, gegebenenfalls auch aufwendige, einmalige Kontrolle der Aufbau valider Simulationsmodelle für die unterschiedlichsten Zustände einer zu simulierenden Kraftfahrzeugelektrik sehr effizient und sicher erfolgen.

Es ist bevorzugt, daß für eine Kraftfahrzeugelektrik automatisch entsprechend benutzerdefinierter Regeln Simulationsszenarien erstellt werden, die jeweils eine Kombination logischer Funktionszustände der zu simulierenden Kraftfahrzeugelektrik umfassen und sich untereinander in mindestens einem logischen Funktionszustand unterscheiden, und daß entsprechend der Simulationsszenarien eine Bestimmung von parametrisierbaren Modellen und Parameterwertsätzen und/oder bauelementspezifischen Modellen erfolgt. Hierdurch wird eine einfache Prüfung einer Vielzahl von Testszenarien möglich, die sonst allein zum Aufbau des Gesamtmodells erheblichen Zeitaufwand erfordern würde.

Wird das erfindungsgemäße Verfahren in der Ausführungsform benutzt, daß zunächst Modelle und gegebenenfalls Parameterwertsätze nur zugewiesen werden, ist es bevorzugt, daß vor der Bestimmung der Modelle eine Bezeichnung eines Simulationstyps und/oder eines Simulationsprogramms eingelesen werden. Daraufhin ist es dann möglich, automatisch die Modelle und gegebenenfalls Parameterwertsätze unter Verwendung dieser Bezeichnung automatisch zu bestimmen, was wiederum den Aufbau eines komplexen Modells für den Benutzer erheblich erleichtert.

Weiterhin ist es bevorzugt, daß bei der Durchführung von komplexeren Simulationen wie zum Beispiel zeitabhängigen Simulationen ein einfacheres, für den Zweck der Simulation noch geeignetes Modell bestimmt wird, falls ein für den gewählten Simulationstyp speziell vorgesehenes Modell nicht vorliegt. Der Benutzer kann in diesem Fall über die automatische Bestimmung informiert werden.

Obwohl es grundsätzlich möglich ist, bei dem erfindungsgemäßen Verfahren alle notwendigen Daten über Dateien einzulesen, die entsprechend über Editoren zu erstellen sind, ist es bevorzugt, daß die Zuweisung und/oder Bestimmung von logischen Bauelementen, Modellen, Parameterwertsätzen, logischen Bauteilzuständen und/oder logischen Funktionszuständen über eine graphische Benutzerschnittstelle erfolgt. Dies erleichtert es insbesondere weniger geübten Benutzern übersichtlich und schnell eine Simulation vorzubereiten.

Bevorzugt werden hierbei logische Bauelemente durch ein diesem logischen Bauelement zugeordnetes, als Icon fungierendes Symbol auf einem Bildschirm des Computersystems dargestellt, auf dem das erfindungsgemäße Verfahren ausgeführt wird. Bei Auswahl des Icons mittels eines Eingabegeräts des Computersystems, wie z. B. einer Maus, werden dann Eingabe-, Bearbeitungs- und/oder Anzeigemasken für Daten zu diesem logischen Bauelement angezeigt und gegebenenfalls entsprechende Daten eingelesen. Insbesondere können auf diese Weise logische Bauteilzustände und/oder bauelementspezifische Modelle oder parametrisierbare Modelle und entsprechende Parameterwertsätze zugewiesen und/oder bestimmt werden. Es ist jedoch auch möglich ein bereits erstelltes logisches Fahrzeugmodell mit zugewiesenen Modellen und/oder logischen Bauteilzuständen z. B. durch Neuzuweisung von Modellen, so zu modifizieren, daß in der zu simulierenden Kraftfahrzeugelektrik ein reales Bauteil durch ein anderes reales Bauteil ersetzt ist.

Aber auch bei Verwendung einer graphischen Benutzerschnittstelle kann die Darstellung einer zu simulierenden Kraftfahrzeugelektrik bzw. des entsprechenden logischen Fahrzeugmodells sehr umfangreich und komplex sein. Dies trifft insbesondere dann zu, wenn in einem Schaltplan die einzelnen Bauteile durch Symbole auf einer Zeichenfläche dargestellt werden, wobei die Verbindungen zwischen den Anschlüssen der Bauteile durch Linien repräsentiert sind. Muß bei einer umfangreicheren Kraftfahrzeugelektrik eine große Anzahl von Änderungen der Verbindungsinformationen durchgeführt werden, ist dazu entsprechender Zeitaufwand erforderlich. Weiterhin können durch solche Änderungen außerordentlich unübersichtliche Schaltpläne mit einer Vielzahl von sich kreuzenden Verbindungen entstehen. Nach einer bevorzugten Weiterbildung des erfindungsgemäßen Verfahrens wird ausgenutzt, daß sich aufgrund der besonderen physikalischen Struktur von Kraftfahrzeugelektriken eine Kraftfahrzeugelektrik mittels Baumstrukturen von Zweipolen darstellen läßt. Gegenstand der vorliegenden Erfindung ist daher auch ein Verfahren zum Erstellen von Modellen einer Kraftfahrzeugelektrik, bei dem über eine graphische Benutzerschnittstelle zum Aufbau und/oder zur Änderung der Daten für die Simulation die zu simulierende Kraftfahrzeugelektrik in Form von zwei Bäumen angezeigt wird, wobei die Wurzel des ersten Baums dem Pluspol und die Wurzel des zweiten Baums dem Minuspol einer Stromquelle entspricht, und die Zweige der Bäume jeweils in Anschlüssen von Bauelementen enden, die dem Plus- bzw. Minuspol der Bauelemente entsprechen. Bei diesen Bauelementen kann es sich insbesondere um Verbraucher handeln. Mittels geeigneter Ersatzschaltungen lassen sich dazu alle Teile der Kraftfahrzeugelektrik durch Zweipole darstellen. Komplexe Baugruppen können in mehrere diese korrekt beschreibende Zweipole aufgelöst werden. Weiterhin können für Standardbaugruppen entsprechende Zweipolbeschreibungen als Modelle vorbereitet und in Bibliotheken abgelegt werden.

Durch diese Darstellung, die allein aufgrund der technischen Besonderheiten einer Fahrzeugelektrik ermöglicht wird, wird zum einen die Erstellung von Netzlisten zur Verwendung in einem Simulationsprogramm wesentlich erleichtert. Die bipolare Baumstruktur stellt weiterhin direkt die in der Kraftfahrzeugelektrik auftretenden Strompfade dar, was den Leitungssatzentwicklern wesentlich entgegenkommt.

Zum anderen können viele von der Darstellung von in Baumstrukturen geordneten Dateien her bekannte Verfahren zum Einsatz kommen. Bevorzugt kann z. B. zur Darstellung oder zum Verdecken eines Zweiges eines Baums unterhalb eines auf einem Bildschirm eines zur Durchführung des erfindungsgemäßen Verfahrens verwendeten Datenverarbeitungssystems dargestellten Verzweigungspunkts dieser Verzweigungspunkt mittels entsprechender Eingabe- bzw. Zeigegeräte, wie z. B. einer Maus, ausgewählt bzw. markiert werden.

Weiterhin können sehr einfach Bauelemente in einer zu simulierenden Kraftfahrzeugelektrik sehr einfach aufgefunden werden, wobei deren Einordnung in die Hierarchieebene der Kraftfahrzeugelektrik sofort klar wird, da den Bauelementen übergeordnete Sicherungen, Leitungen usw. einfach im Gesamtkontext der übrigen Strompfade verfolgt werden können.

Darüber hinaus ist sehr einfach eine Änderung der Verbindungsinforniation über die Baumdarstellung möglich. Insbesondere in der Entwicklungsphase von Kraftfahrzeugelektriken kommt es zu häufigen Änderungen der Elektrikarchitektur, bei denen ganze Strompfade oder Teilstrompfade an andere Sicherungen oder Verzweigungspunkte angeschlossen werden. Durch Verschieben ganzer Zweige lassen sich solche Änderungen sehr einfach und übersichtlich durchführen, wozu wie bei graphischen Benutzeroberflächen und dabei insbesondere der Darstellung von Dateistrukturen üblichen Drag-and-Drop-Verfahren Anwendung finden können.

Weiterhin können erfindungsgemäß Eigenschaften eines Bauelements durch Auswahl des Bauelements auf der Anzeigefläche auf dem Bildschirm einfach geändert werden. Auf eine solche Auswahl hin können Formulare zur Spezifikation von z. B. Modellen, Zuständen oder Parameterwerten angezeigt werden, aus denen entsprechende Einträge ausgewählt werden können.

Weiterhin können nach Simulationsläufen die Simulationsergebnisse bevorzugt direkt in der Baumstruktur dargestellt werden, was den Vorteil hat, daß Stromverzweigungen übersichtlich erkannt und Spannungsverluste in einem Strompfad einfach einzelnen Bauelementen zugeordnet werden können. Besonders bevorzugt können kritische Bauelemente farblich gekennzeichnet werden.

Das geschilderte Verfahren eignet sich grundsätzlich für jedes Schaltplaneingabewerkzeug für Kraftfahrzeugelektriken, findet jedoch besonders bevorzugt Anwendung im Zusammenhang mit dem weiter oben geschilderten Verfahren zur Vorbereitung einer Computersimulation einer Kraftfahrzeugelektrik, bei dem logische Bauelemente verwendet werden, sowie der entsprechenden Weiterbildungen dieses Verfahrens.

Bei dem erfindungsgemäßen Verfahren zur Vorbereitung einer Computersimulation werden bevorzugt die Parameterwertsätze und/oder die Modelle in einer Datenbank oder verschiedenen Datenbanken abgelegt, wobei bestimmte Parameterwertsätze und/oder Modelle zur Erstellung der Eingabe- und/oder Steuerdateien aus der Datenbank oder den Datenbanken ausgelesen werden. Die Verwendung von Datenbanken erlaubt eine besonders übersichtliche und darüber hinaus auch sichere und kompakte Abspeicherung der genannten Daten, wobei insbesondere Datenintegrität sichergestellt werden kann. So können mehrere Benutzer zugleich auf dieselbe Datenbank bzw. dieselben Datenbanken zugreifen, wobei gewährleistet ist, daß alle Benutzer dieselben Parameterwertsätze und/oder Modelle benutzen, was einen Vergleich der Arbeitsergebnisse wesentlich erleichtert.

Besonders bevorzugt ist hierzu vorgesehen, daß bei einem schreibenden Zugriff auf die Datenbank oder eine der verschiedenen Datenbanken geprüft wird, ob der zugreifende Benutzer eine Schreibberechtigung hat. Ist dies nicht der Fall, kann ein schreibender Zugriff verhindert werden. Damit wird vermieden, daß z. B. auch Unerfahrene oder nichtautorisierte Benutzer durch Unachtsamkeit Veränderungen in den Parameterwertsätzen und/oder Modellen vornehmen können. Hierdurch wird eine hohe Validität, Vergleichbarkeit und Nachvollziehbarkeit der Simulationsmodelle weitgehend gewährleistet.

Bei dem erfindungsgemäßen Verfahren wird bevorzugt nach dem Schreiben der Eingabe- und/oder Steuerdateien das entsprechende Simulationsprogramm zur Durchführung der Simulation unter Verwendung der erstellten Dateien gestartet.

Besonders bevorzugt werden nach Ende der Simulation die Ausgabedateien des Simulationsprogramms, in denen die Resultate der Simulation gespeichert sind, eingelesen und die aus der Simulation hervorgegangenen Daten analysiert. Basierend auf der Analyse werden dann Berichte automatisch erstellt und die Ergebnisse angezeigt.

Weiterer Gegenstand der vorliegenden Erfindung ist ein Computerprogramm mit Programmcode-Mitteln, um das erfindungsgemäße Verfahren, insbesondere nach einem der Ansprüche 1 bis 47, durchzuführen, wenn das Programm auf einem Computer ausgeführt wird.

Ebenfalls Gegenstand der Erfindung ist ein Computerprogrammprodukt mit Programmcode-Mitteln, die auf einem computerlesbaren Datenträger gespeichert sind, um das erfindungsgemäße Verfahren, insbesondere nach einem der Ansprüche 1 bis 47, durchzuführen, wenn das Computerprogrammprodukt auf einem Computer ausgeführt wird.

Schließlich ist Gegenstand der vorliegenden Erfindung eine Datenverarbeitungsanlage mit einer Speichereinrichtung, mindestens einem Eingabegerät zur Eingabe von Daten und einem Bildschirm zur Anzeige von Informationen, bei der in der Speichereinrichtung ein Programm zur Ausführung des erfindungsgemäßen Verfahrens, insbesondere nach einem der Ansprüche 1 bis 47, und mindestens eine Datenbank mit logischen Bauelementen, Modellen und/oder Parameterwertsätzen gespeichert ist.

Eine bevorzugte Ausführungsform der vorliegenden Erfindung wird nun beispielhaft anhand der Zeichnungen beschrieben. Es zeigen:
- Fig. 1: eine schematische Darstellung einer Datenverarbeitungsanla- ge nach einer bevorzugten Ausführungsform der Erfindung zur Durchführung des Verfahrens nach einer bevorzugten Ausführungsform der Erfindung,
- Fig. 2: ein schematisches Ablaufdiagramm für das Verfahren nach der bevorzugten Ausführungsform der Erfindung,
- Fig. 3: eine schematische Darstellung zur Veranschaulichung der Er- stellung von logischen Fahrzeugmodellen und deren Parame- trisierung bei dem Verfahren nach der bevorzugten Ausfüh- rungsform der Erfindung,
- Fig. 4: eine schematische Darstellung zur Veranschaulichung der Verwendung von Simulationsszenarien in einem ersten Bei- spiel bei den Verfahren nach der bevorzugten Ausführungs- form der Erfindung,
- Fig. 5: eine schematische Darstellung zur Veranschaulichung der Verwendung von Simulationsszenarien in einem zweiten Bei- spiel bei dem Verfahren nach der bevorzugten Ausführungs- form der Erfindung,
- Fig. 6: eine schematische Darstellung zur Veranschaulichung der Verwendung von Simulationsszenarien in einem dritten Bei- spiel bei dem Verfahren nach der bevorzugten Ausführungs- form der Erfindung,
- Fig. 7: eine schematische Darstellung eines positiven Strompfades der Frontbeleuchtung in einer Baumdarstellung auf einer gra- phischen Benutzerschnittstelle bei dem Verfahren nach der bevorzugten Ausführungsform der Erfindung, und
- Fig. 8: eine schematische Darstellung eines negativen Strompfades der Frontbeleuchtung in einer Baumdarstellung auf einer gra- phischen Benutzerschnittstelle bei dem Verfahren nach der bevorzugten Ausführungsform der Erfindung.

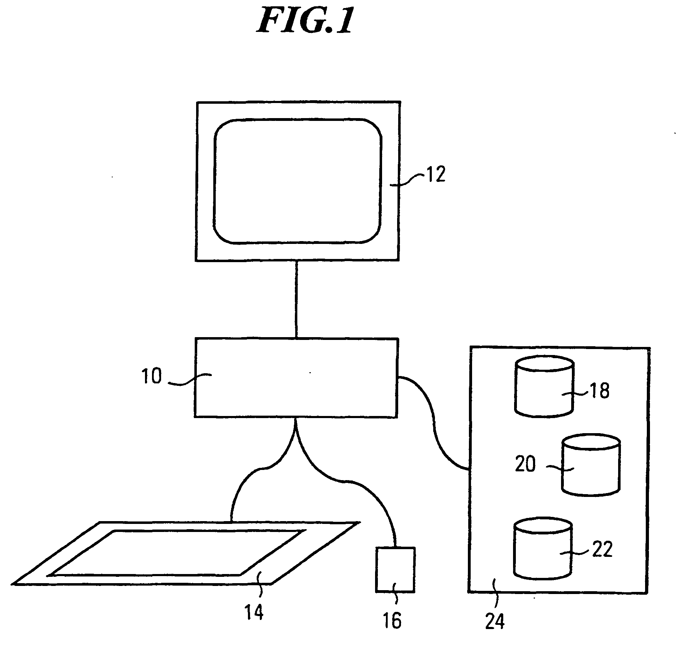

In Fig. 1 weist ein schematisch dargestelltes Datenverarbeitungssystem eine Zentraleinheit 10 mit einem nicht gezeigten Prozessor und einem ebenfalls nicht gezeigten Hauptspeicher sowie, jeweils mit der Zentraleinheit 10 über entsprechende Schnittstellen verbunden, einen Bildschirm 12, eine Tastatur 14, eine Maus 16 sowie drei Datenbasen 18, 20 und 22 auf, die in der Fig. 1 zwar getrennt dargestellt sind, aber auf einer einzigen schematisch dargestellten Festplatte 24 als Speichereinrichtung gespeichert sind.

Zur Durchführung des erfindungsgemäßen Verfahrens zur Vorbereitung einer Computersimulation einer Kraftfahrzeugelektrik unter Verwendung eines Simulationsprogramms nach einer bevorzugten Ausführungsform der Erfindung ist in den Speicher der Zentraleinheit 10 ein entsprechendes erfindungsgemäßes Computerprogramm geladen, das mit Hilfe des in der Zentraleinheit 10 vorhandenen Prozessors ausgeführt wird, wobei Eingaben über die Tastatur 14 und die Maus 16 sowie Ausgaben über den Bildschirm 12 erfolgen können. Weiterhin kann der Prozessor in bekannter Art und Weise auf die Datenbasen 18, 20 oder 22 zugreifen. Die Datenbasen 18, 20 und 22 sind Teil eines relationalen Datenbanksystems, das zur Ausführung des erfindungsgemäßen Verfahrens verwendet wird.

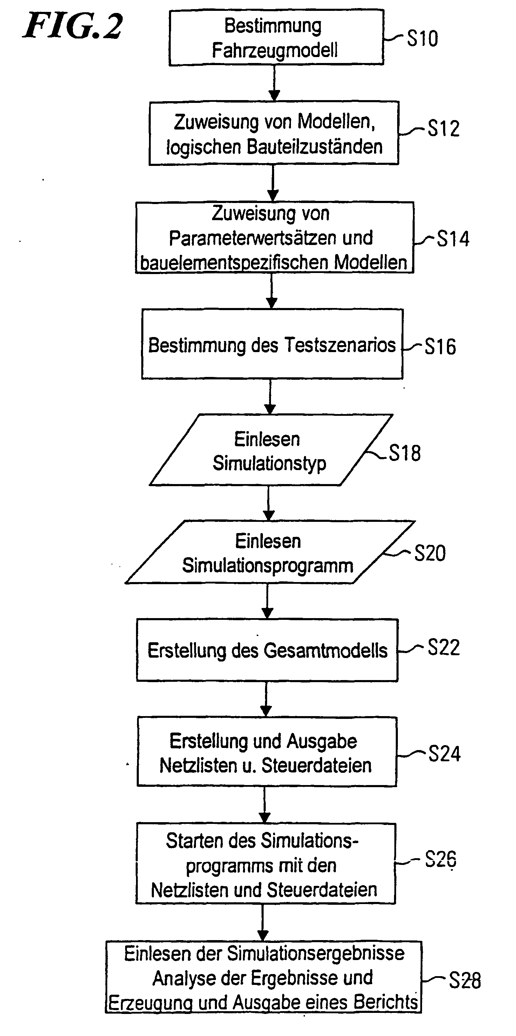

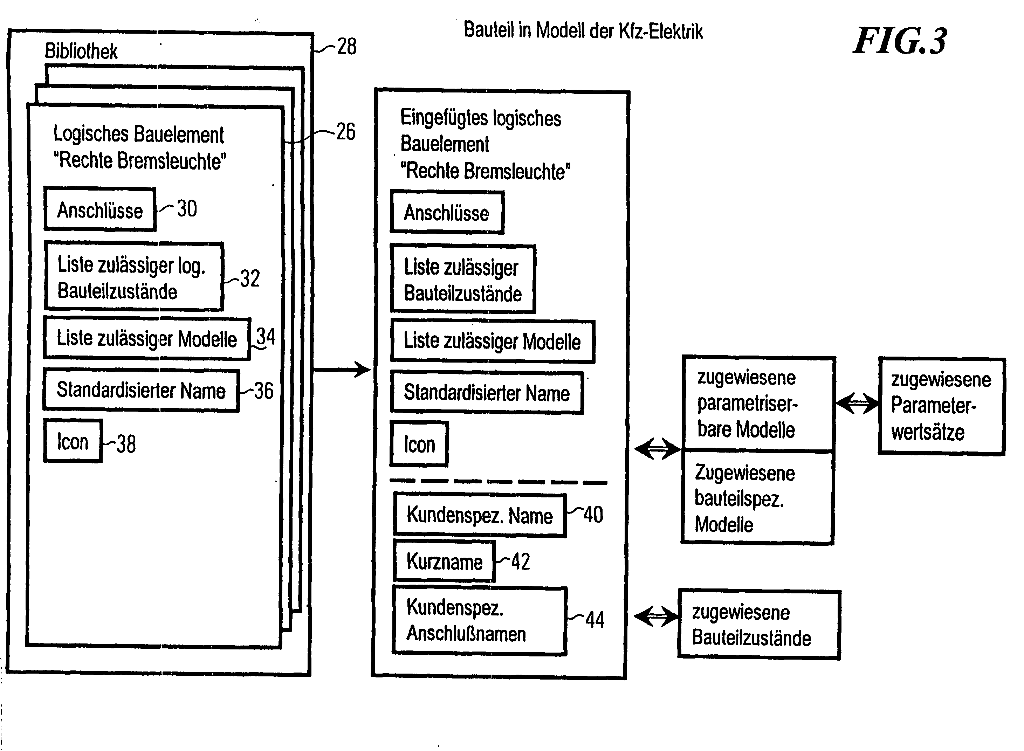

Das Verfahren nach dieser Ausführungsform der Erfindung ist in großen Zügen in dem Ablaufdiagramm in Fig. 2 dargestellt. In Schritt S 10 wird zunächst ein logisches Fahrzeugmodell bereitgestellt. Wie in Fig. 3 dargestellt, kann dies durch Auswahl von logischen Bauelementen 26 aus einer Bibliothek logischer Bauelemente 28, die in der Datenbasis 18 abgespeichert ist, geschehen.

Die logischen Bauelemente 26 sind allein durch ihre Funktion in der Kraftfahrzeugelektrik definiert. So entspricht das in Fig. 3 gezeigte logische Bauelement "Rechte Bremsleuchte" einem ansonsten beliebigen realen Bauelement, das die Funktion der rechten Bremsleuchte erfüllt. Dementsprechend muß das Bauelement in einem gewissen Funktionszusammenhang mit anderen Bauelementen der Kraftfahrzeugelektrik stehen. Diese logischen Bauelemente weisen daher Anschlüsse 30 auf, die die entsprechenden Anschlüsse realer Bauelemente repräsentieren und über die logische Bauelemente miteinander verbindbar sind.

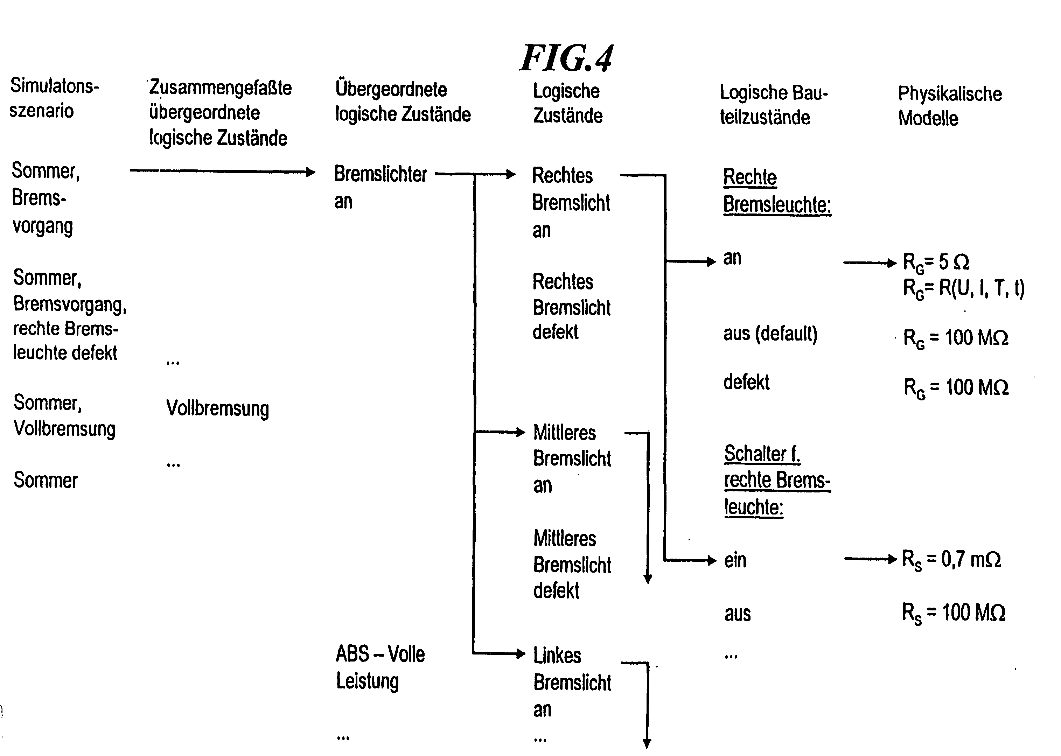

Weiterhin enthält ein logisches Bauelement eine Liste 32 zulässiger logischer Bauteilzustände, wobei jeder logische Bauteilzustand einem Betriebszustand eines realen Bauelements entspricht. Wie in Fig. 4, in der vorletzten Spalte dargestellt, können der rechten Bremsleuchte drei zulässige logische Bauteilzustände zugeordnet werden, nämlich, daß die Bremsleuchte angeschaltet ("An"), ausgeschaltet ("Aus") oder "defekt" ist. Dabei ist der logische Bauteilzustand "An" nur für bestimmte Modelle, in denen beispielsweise Eigenschaften der Bremsleuchte berücksichtigt werden, die sich bei Einschalten ändern, oder bestimmte Fahrzeugmodelle, in denen der Einfachheit halber keine Schalter für die Bremsleuchten vorgesehen sind, sinnvoll.

Weiter ist jedem logischen Bauelement eine Liste 34 zulässiger Modelle zugeordnet, bei denen es sich um parametrisierbare Modelle handeln kann, die erst durch Angabe entsprechender Parameterwertsätze in ein für eine Simulation verwendbares Modell überführt werden oder um bauelementspezifische Modelle, die einschließlich ihrer Parametrisierung nur für ein bestimmtes reales Bauteil geeignet sind.

Darüber hinaus ist jedem logischen Bauelement ein standardisierter Name 36 zugeordnet, mittels dessen das logische Bauelement bezeichnet werden kann. Dieser standardisierte Name dient in dem Verfahren zur Identifikation des logischen Bauelements. Weiterhin kann dieser wegen der Standardisierung zur Identifikation des logischen Bauelements in allen Organisationseinheiten auch eines großen internationalen Unternehmens verwendet werden. Dem logischen Bauelement ist weiterhin ein graphisches Symbol 38 zugeordnet, das zur Darstellung des logischen Bauelements auf dem Bildschirm 12 verwendet werden kann und dann als Icon verwendet wird. Diese logischen Bauelemente werden durch Datensätze mit entsprechenden Feldern in einer Tabelle einer relationalen Datenbank definiert.

Zur Bestimmung des Fahrzeugmodells werden aus der Bibliothek 28 logischer Bauelemente die logischen Bauelemente ausgewählt und bestimmt, die entsprechend ihrer Funktion in der zu simulierenden Kraftfahrzeugelektrik enthalten sind. Daraufhin werden die logischen Bauelemente über ihre Anschlüsse miteinander verbunden. Nach Einfügen eines logischen Bauelements in ein logisches Fahrzeugmodell sind für jedes eingefügte logische Bauelement noch drei Datenfelder 40, 42 und 44 für kundenspezifische Namen, Kurznamen und kundenspezifische Anschlußnamen vorgesehen, so daß bei der Ausgabe von Simulationsresultaten in den Darstellungen als Bezeichnungen der logischen Bauelemente und ihrer Anschlüsse die kundenspezifischen Namen, die Kurznamen und kundenspezifische Anschlußnamen verwendet werden können.

Auf dieser Stufe enthält das logische Fahrzeugmodell noch keinerlei Informationen über reale Bauteile in einer realen Kraftfahrzeugelektrik. Zur Vorbereitung einer Simulation müssen den logischen Bauelementen entsprechende Modelle unterlegt werden, die das Verhalten realer Bauelemente wiedergeben. Dazu wird in Schritt S12 jedem eingefügten logischen Bauelement 26 mindestens ein parametrisierbares Modell und/oder mindestens ein bauelementspezifisches Modell zugewiesen, was in Fig. 3 durch den Doppelpfeil symbolisiert ist. Bei Verwendung einer relationalen Datenbank kann die Zuweisung über entsprechende Primärschlüssel erfolgen.

Die Modelle sind in der Datenbasis 20 für normale Benutzer schreibgeschützt abgespeichert, so daß eine unbefugte und/oder unbeabsichtigte Manipulation der Modelldaten vermieden wird.

Für ein gegebenes logisches Bauelement können verschiedene Simulationsmodelle verwendet werden, die sich hinsichtlich ihrer Komplexität und der Effekte unterscheiden, die mit ihrer Hilfe bei der Simulation berücksichtigt werden können. In den beiden rechten Spalten in Fig. 4 ist dies am Beispiel einer rechten Bremsleuchte veranschaulicht. In der Spalte "logische Bauteilzustände" sind unter der Angabe des logischen Bauelements die zulässigen logischen Bauteilzustände angegeben, in der Spalte "physikalische Modelle" die entsprechenden physikalischen Modelle, bei denen es sich um ein parametrisierbares Modell mit entsprechenden Parameterwertsätzen oder ein bauelementspezifisches Modell handeln kann. Für den logischen Bauteilzustand der rechten Bremsleuchte "An" sind zwei Modelle vorgegeben, nämlich eines, in dem die Bremsleuchte in einem parametrisierbaren Modell durch einen festen ohmschen Widerstand dargestellt ist, dessen Größe durch einen entsprechenden Parameterwert von 5 Ohm gegeben ist, und ein weiteres komplexeres Modell, in dem die rechte Bremsleuchte zwar auch durch einen Widerstand dargestellt ist, dessen Größe jedoch von der Spannung U, dem Strom I, der Temperatur T und der Zeit t bei einer dynamischen Simulation abhängt, wobei es sich hier um ein bauelementspezifisches Modell handelt.

Aus diesen zugewiesenen Modellen wird in einem späteren Schritt S22 des Verfahrens ein Modell zur Verwendung bei einer Simulation bestimmt. Weiterhin werden jedem logischen Bauelement logische Bauteilzustände zugewiesen, von denen eines zur Simulation ausgewählt werden kann.

Auch auf dieser Stufe enthält das Bauteil in dem Modell der Kraftfahrzeugelektrik noch sehr wenig Informationen über ein konkretes, reales Bauelement, das die Funktion des logischen Bauelements erfüllt. Zur Berücksichtigung dieser Eigenschaften realer Bauelemente erfolgt in Schritt S 14 eine Zuweisung von Parameterwertsätzen für bereits zugewiesene parametrisierbare Modelle und/oder eine Zuweisung von entsprechenden bauelementspezifischen Modellen.

Die Parameterwertsätze sind in der Datenbasis 20 abgelegt und können mittels verschiedener Attribute gefunden werden. Zu diesen Attributen gehört der standardisierte Name des logischen Bauelements als dessen Bezeichnung, ein logischer Bauteilzustand des logischen Bauelements und eine Bezeichnung des Modells für das der Parameterwertsatz verwendbar ist. Mögliche Quellen für solche Parameter sind Messungen an Fahrzeugen einer bereits in Produktion befindlichen Serie oder auch Prototypen zu entwickelnder Fahrzeugserien. Gegebenenfalls können für erste Simulationen auch Daten ähnlicher Fahrzeuge genutzt werden. Andere Quellen sind Datenblätter oder Normen. In der Fig. 4 ist der rechten Bremsleuchte als Modell also ein ohmsches Gleichstrommodell zugeordnet, dem in Abhängigkeit von dem logischen Bauteilzustand verschiedene Widerstandswerte als Parameterwerte zugeordnet werden. Ist die Bremsleuchte "An", was einer intakten Bremsleuchte entspricht, hat sie einen Widerstand von 5 Ohm, ist sie defekt, hat sie einen Widerstand von 100 MOhm. Wird die Bremsleuchte mit dem diese steuernden Schalter zu einem Bauteil zusammengefaßt, kann sie die drei gezeigten verschiedenen logischen Betriebszustände annehmen, die mit den gezeigten entsprechenden Werten des Ohmschen Widerstands modelliert werden.

Zur vollständigen Definition des Gesamtmodells für das Simulationsprogramm sind noch die logischen Bauteilzustände der bestimmten logischen Bauelemente zu bestimmen, die bis dahin nur zugewiesen waren. Hierzu werden erfindungsgemäß logische Zustände verwendet, die einem Betriebszustand einer Gruppe miteinander wechselwirkender logischer Bauelemente entsprechen. Dementsprechend sind in einem logischen Zustand logische Bauteilzustände der in der Gruppe enthaltenen logischen Bauelemente einander zugeordnet.

Unter Fortsetzung des Konzepts lassen sich die Zustände von Gruppen miteinander wechselwirkender logischer Bauelemente zu übergeordneten logischen Zuständen zusammenordnen, wobei solche übergeordneten logischen Zustände zur Definition sogenannter zusammengefaßter übergeordneter logischer Zustände verwendet werden können, die einem Zustand eines großen Teils der Kraftfahrzeugelektrik entsprechen. Diese können dann in sogenannten Simulationsszenarien verwendet werden, in denen solche zusammengefaßten übergeordneten logischen Zustände einander zugeordnet sind.

Dies wird nun anhand der Fig. 4, 5 und 6 erläutert, in denen jeweils die Zuordnungen für verschiedene Simulationsszenarien skizziert sind. In Spalten nebeneinander sind zunächst die Simulationsszenarien, dann die diesen Szenarien zugeordneten zusammengefassten übergeordneten logischen Zustände, die letzteren zugeordneten übergeordneten logischen Zustände und die den übergeordneten logischen Zuständen zugeordneten logischen Zustände aufgeführt. Es folgt eine Spalte mit logischen Bauteilzuständen, in der unter der Angabe des logischen Bauelements jeweils die zulässigen logischen Bauteilzustände aufgeführt sind. Daneben sind die entsprechenden physikalischen Modelle, die aus einem parametrisierbaren Modell und entsprechenden Parameterwerten gebildet sind aufgeführt. Das Beispiel bezieht sich auf Bremsvorgänge, so daß in diesen Figuren logische Bauelemente und logische Zustände aufgeführt sind, die im Zusammenhang mit Bremsvorgängen von Bedeutung sind. Der Übersichtlichkeit halber sind dabei für die dargestellten logischen Zustände nicht alle entsprechenden logischen Bauelemente und deren logische Bauteilzustände dargestellt.

In Fig. 4 ist das Simulationsszenario eines Bremsvorgangs im Sommer dargestellt. Bei einem solchen Bremsvorgang werden alle Bremslichter angeschaltet. Dem entspricht der übergeordnete logische Zustand "Bremslichter an". Wie in Fig. 4 zu erkennen entsprechen diesem übergeordneten logischen Zustand "Bremslichter an" drei logische Zustände, nämlich "Rechtes Bremslicht an", "Mittleres Bremslicht an" und "Linkes Bremslicht an". Diesen logischen Zuständen entsprechen wiederum logische Bauteilzustände der an der Funktion eines Bremslichts beteiligten logischen Bauelemente. In Fig. 4 ist dies am Beispiel der rechten Bremsleuchte dargestellt. Dem logischen Zustand "Rechtes Bremslicht an" entspricht der logische Bauteilzustand "An" des logischen Bauelements "Rechte Bremsleuchte" und der logische Bauteilzustand "Ein" des Schalters für die rechte Bremsleuchte. Entsprechendes gilt für die mittlere und linke Bremsleuchte bzw. die entsprechenden Schalter. Diese Zuordnungen sind in entsprechenden Dateien in der Datenbasis 22 abgespeichert.

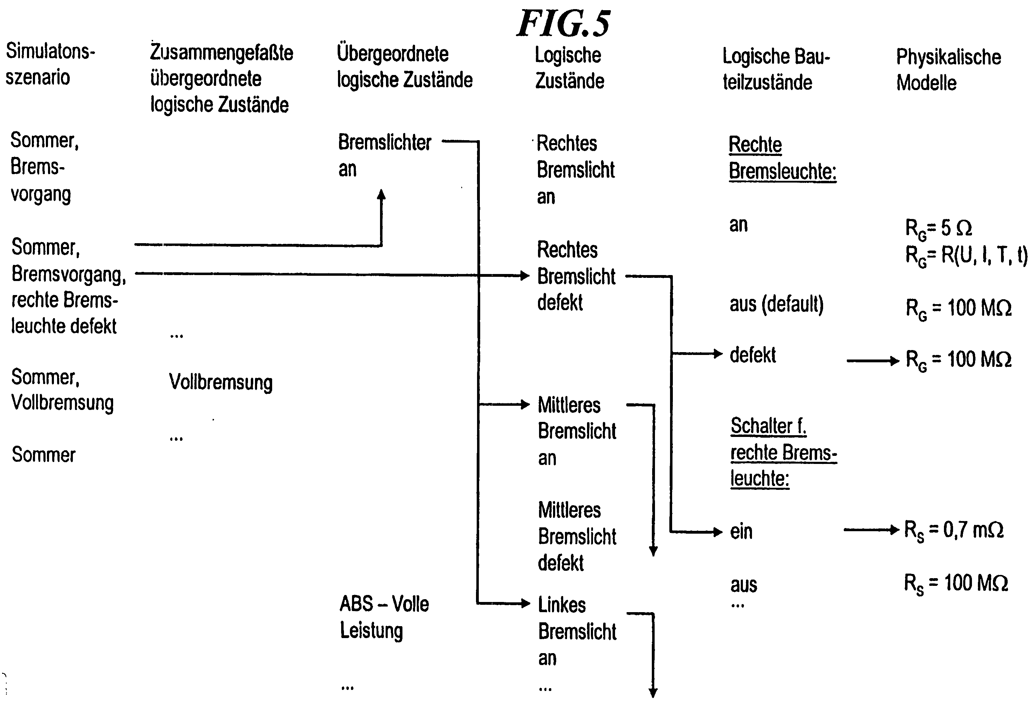

Bei dem in Fig. 5 gezeigten Simulationsszenario eines Bremsvorgangs im Sommer, bei dem die rechte Bremsleuchte defekt ist, wird ein übergeordneter logischer Zustand "Bremslichter an" aktiviert, dem die logischen Zustände "Mittleres Bremslicht an" und "Linkes Bremslicht an" entsprechen. Der logische Zustand "Rechtes Bremslicht an" wird überschrieben von dem logischen Zustand "Rechtes Bremslicht defekt". Entsprechend diesem logischen Zustand wird als logischer Bauteilzustand der rechten Bremsleuchte der Zustand "defekt" und als logischer Bauteilzustand des logischen Bauelements "Schalter für rechte Bremsleuchte" "Ein" gewählt.

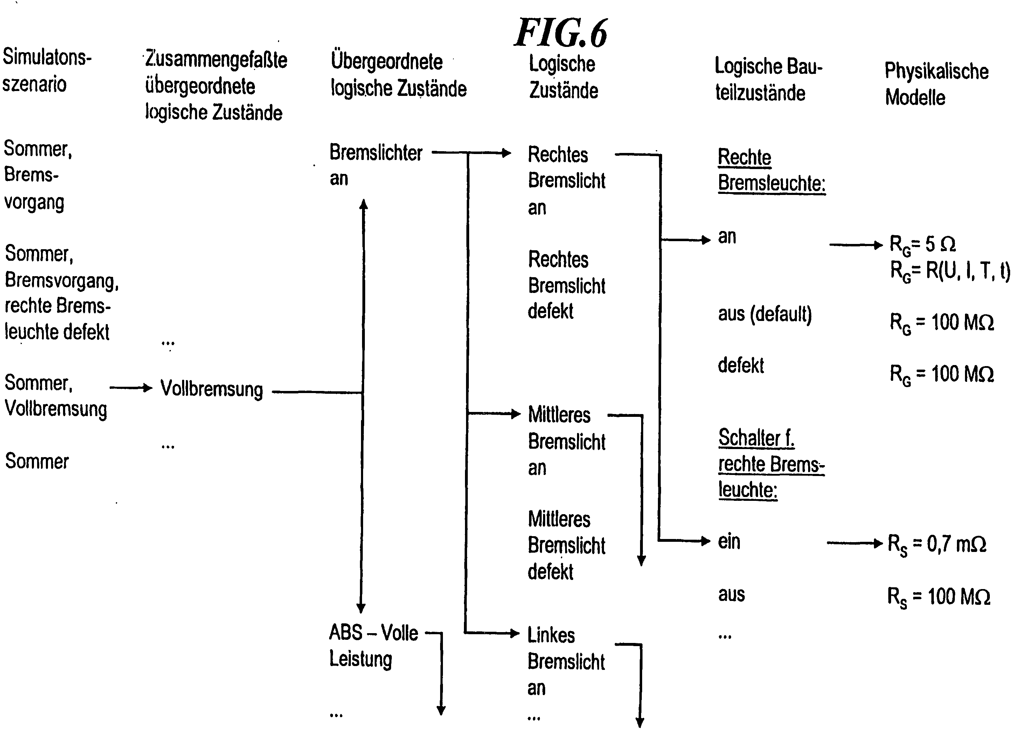

In dem dritten, in Fig. 6 veranschaulichten Beispiel, ist ein Simulationsszenario einer Vollbremsung im Sommer gezeigt, das unter anderem dem zusammengefaßten übergeordneten logischen Zustand "Vollbremsung" aufweist, der wiederum die übergeordneten logischen Zustände "Bremslichter an" und "ABS - Volle Leistung" enthält, wobei der letzte logische Zustand "ABS - volle Leistung" einen Betriebszustand bezeichnet, bei dem die mit der Funktion des Antiblockiersystems im Zusammenhang stehenden Bauelemente eine Betriebszustand einnehmen, der bei voller Leistung des Antiblockiersystems auftritt. Die durch die Aktivierung des übergeordneten logischen Zustands "Bremslichter an" bedingten logischen Zustände bzw. logischen Bauteilzustände entsprechen denen im ersten Beispiel (vgl. Fig. 4). Die mit dem übergeordneten logischen Zustand "ABS - Volle Leistung" zusammenhängenden logischen Zustände sind der Übersichtlichkeit halber in Fig. 6 nicht mehr gezeigt.

Diese Korrelationen von Simulationszenarien, zusammengefaßten übergeordneten logischen Zuständen, übergeordneten logischen Zuständen, logischen Zuständen und logischen Bauteilzuständen sind in der Datenbasis 22 abgelegt. Da sie nur auf der logischen Ebene definiert sind, können sie nach Einlesen bei einer Vielzahl von Simulationen verwendet werden, die sich nur in den verwendeten Modellen - parametrisierbare Modelle mit entsprechenden Parameterwertsätzen und/oder bauelementspezifischen Modellen - für reale Bauelemente unterscheiden.

In den Schritten S18 und S20 werden eine Bezeichnung für einen Simulationstyp, bei dem es sich zum Beispiel um eine Gleichstromsimulation oder eine dynamische, zeitabhängige Simulation handeln kann, und eine Bezeichnung eines Simulationsprogramms, für das das Gesamtmodell und die Eingabe- bzw. Steuerdateien erstellt werden sollen, abgefragt und eingelesen.

In Schritt S22 wird dann ein Gesamtmodell automatisch erstellt. Anhand der vorhandenen Daten muß für jedes logische Bauelement in dem logischen Fahrzeugmodell jeweils aus den zugewiesenen Modellen und den zugewiesenen Parameterwertsätzen ein Modell und, wenn das Modell parametrisierbar ist, ein Parameterwertsatz zur Verwendung bei der Simulation bestimmt werden.

Dazu wird folgender Prozeß abgearbeitet:

Zunächst wird geprüft, ob für alle mit einem logischen Bauelement in das System eingefügten logischen Bauteilzustände ein Modell definiert ist. Daraufhin wird geprüft, ob in übergeordneten Ebenen logische Zustände aktiviert sind, die mit den logischen Teilzuständen korreliert sind. Entsprechend der logischen Zustände werden die logischen Bauteilzustände bestimmter logischer Bauelemente bestimmt, wobei sichergestellt wird, daß keine sich widersprechenden Teilzustände vorkommen. Für alle Gruppen von logischen Bauteilzuständen wird dann geprüft, ob ein logischer Zustand zugewiesen und aktiviert ist. Ist dies der Fall, wird das dem entsprechenden logischen Bauteilzustand zugeordnete Modell, das heißt parametrisierbare Modell einschließlich eines entsprechenden Parameterwertsatzes oder bauelementspezifisches Modell, aktiviert bzw. bestimmt. Ist dies nicht der Fall, wird ein voreingestellter logischer Bauteilzustand (Default-Wert) benutzt, um aus den zugewiesenen Modellen und/oder Parameterwertsätzen ein zur Verwendung bei der Simulation bestimmtes physikalisches Modell zu bestimmen.

Auf der Basis des in Schritt S22 erstellten Gesamtmodells werden in Schritt S24 die zur Durchführung der Simulation notwendigen Netzlisten und Steuerdateien für das Simulationsprogramm, welche die Information über den physikalischen Zustand der Kraftfahrzeugelektrik enthalten, erstellt und zur Verwendung für das Simulationsprogramm ausgegeben.

Daraufhin wird in Schritt S26 das eigentliche Simulationsprogramm unter Verwendung der gerade erzeugten Netzlisten und Steuerdateien gestartet.

Nach Beendigung der Simulation werden in Schritt S28 die Simulationsergebnisse, die von dem Simulationsprogramm in entsprechende Dateien geschrieben wurden, eingelesen, analysiert und ein Testbericht erzeugt, der dann auf dem Bildschirm 12 angezeigt wird.

Das gerade geschilderte Verfahren wird unter Benutzung einer graphischen Benutzerschnittstelle auf dem Datenverarbeitungssystem durchgeführt. Diese zeichnet sich dadurch aus, daß die Kraftfahrzeugelektrik mittels Baumstrukturen dargestellt wird. Dabei wird eine bipolare Baumstruktur von Zweipolen verwendet. Die Wurzel eines Baums beginnt dabei in dem Plus- bzw. Minuspol einer Batterie der Kraftfahrzeugelektrik und endet in dem entsprechenden Anschluß eines einen Verbraucher verkörpernden logischen Bauelements. Die Zweige sind durch gepunktete Linien dargestellt.

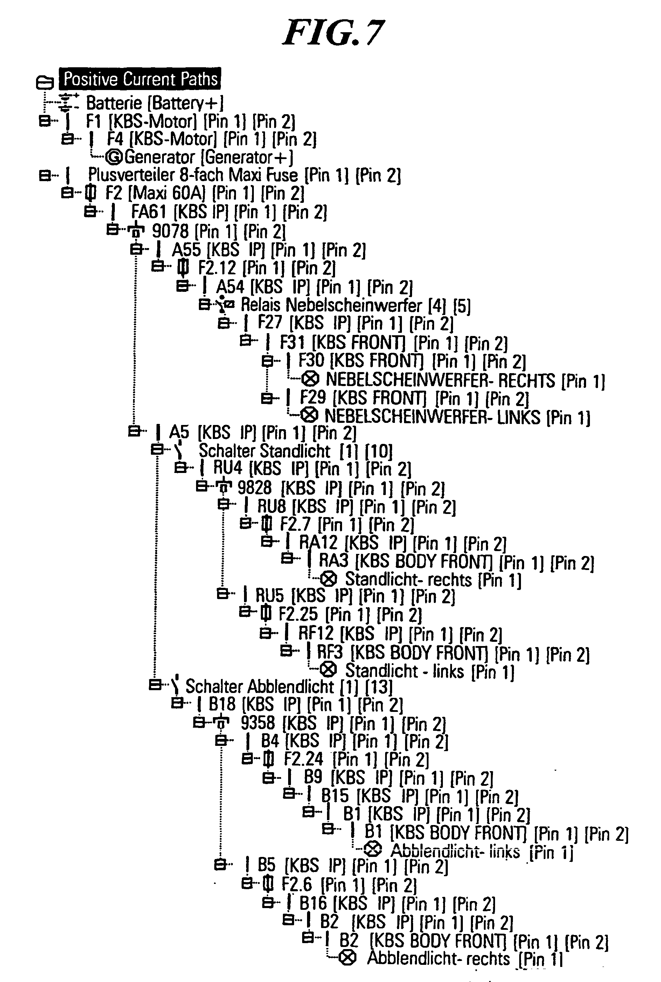

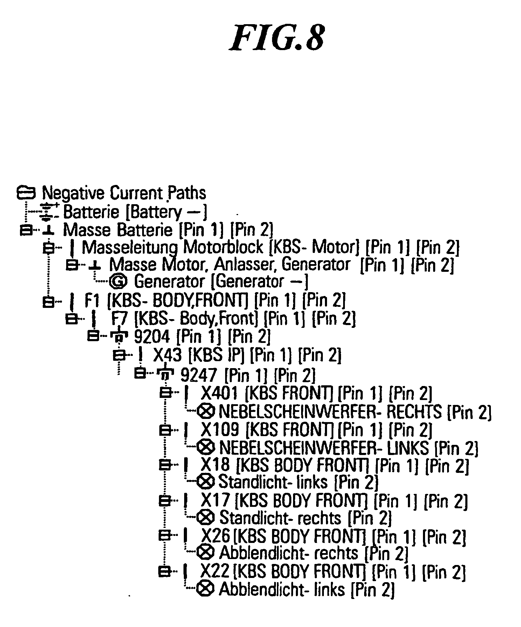

In den Fig. 7 und 8 sind beispielhaft positive und negative Strompfade der Frontbeleuchtung in einer solchen Baumdarstellung gezeigt. Dabei sind jedem logischen Bauelement ein Symbol bzw. Icon 42 sowie ein Standardname und die Namen der Anschlüsse zugeordnet. Beispielsweise verläuft ein Strompfad in Fig. 7 von dem Pluspol der Batterie über den Plusverteiler 8-fach Maxi Fuse mit den Anschlüssen Pin1 und Pin2 zu einer Sicherung F2 und von dort über ein Kabel FA61 zu einer Verzweigung 9078, deren einer Zweig weiter über eine Leitung A55 und eine Sicherung F2.12 und ein Kabel A54 zu einem Relais für den Nebelscheinwerfer mit Anschlüssen 4 und 5 führt. Von dem Relais aus führt ein Kabel F27 über ein Kabel F31 und ein Kabel F30 zu dem Anschluß Pin1 des Nebelscheinwerfers rechts. Entsprechendes gilt für die anderen Zweige.

Der in Fig. 8 dargestellte negative Strompfad beginnt am Minuspol der Batterie und endet jeweils an den mit "Pin2" bezeichneten Anschlüssen der entsprechenden Verbraucher.

Bei dieser Darstellung kommen von der Darstellung von Dateistrukturen her bekannte Merkmale zum Einsatz.

So können Zweige auf- und zugeklappt werden, in dem die die Verzweigungspunkte kennzeichnenden Quadrate 44 mit einem Eingabegerät wie z. B. der Maus 16 markiert werden.

Jedem der dargestellten logischen Bauelemente sind Auswahlmenüs zugeordnet, die sich durch Markierung des entsprechenden Symbols bzw. Icons 30 mit einem Eingabegerät, z. B. durch Anklicken mit der rechten Taste der Maus 16, anzeigen lassen. Anhand der sich dann öffnenden Auswahlmenüs können die zugewiesenen oder bestimmten Simulationsmodelle, die Parameterwertsätze oder die Zustände angegeben und/oder modifiziert werden. So können alle für ein logisches Bauelement relevanten Informationen übersichtlich erreicht werden.

Weiterhin lassen sich die Verbindungsinformationen zwischen logischen Bauelementen leicht ändern. Hierzu können einzelne Verbraucher bzw. logische Bauelemente oder auch Bauelemente mit anhängenden, in der Baumstruktur tieferliegenden Zweigen durch Drag-and-Drop an andere Knotenpunkte oder logische Bauelemente angeschlossen werden.

Schließlich können nach Simulationsläufen die Simulationsergebnisse direkt in der Baumstruktur dargestellt werden. Dabei werden kritische Bauelemente farblich gekennzeichnet.

Die Baumstrukturen werden entsprechend der Reihenfolge der Anzeige der Bauelemente in der Baumstruktur in Tabellen abgelegt. Da nur Zweipole verwendet werden, können daraus schnell Netzlisten für z. B. bestehende, kommerzielle Simulationsprogramme mit der notwendigen Knotennumerierung generiert werden. Die Parameter für Bauelemente werden über eine jedem Bauelement zugewiesene ID-Nummer aus anderen Tabellen des relationalen Datenbanksystems ermittelt. Obwohl sich diese Darstellungsweise besonders für das erfindungsgemäße Verfahren, bei dem logische Bauelemente verwendet werden, eignet, kann es auch für andere Schaltungseingabewerkzeuge verwendet werden.

### Bezugszeichenliste

- 10: Zentraleinheit
- 12: Bildschirm
- 14: Tastatur
- 16: Maus
- 18: Datenbasis
- 20: Datenbasis
- 22: Datenbasis
- 24: Festplatte
- 26: logisches Bauelement
- 28: Bibliothek logischer Bauelemente
- 30: Datenfeld
- 32: Datenfeld
- 34: Datenfeld
- 36: Datenfeld
- 38: Datenfeld
- 40: Datenfeld
- 42: Icon
- 44: Verzweigungspunkte

## Patentansprüche

1. Verfahren zur Vorbereitung einer Computersimulation einer Kraftfahrzeugelektrik unter Verwendung eines Simulationsprogramms, bei dem
logische Bauelemente (26) definiert sind, die durch eine vorgegebene Funktion definierte Bauelemente einer Kraftfahrzeugelektrik darstellen, eine vorgegebene Anzahl von Anschlüssen aufweisen und denen jeweils eine Menge von verfügbaren Modellen zugeordnet ist, die mindestens ein parametrisierbares Modell und/oder ein bauelementspezifisches Modell zur Beschreibung des Verhaltens eines realen, die Funktion des logischen Bauelements (26) erfüllenden Bauelements enthält, wobei jedes der parametrisierbaren Modelle Modellparameter aufweist, denen Werte zuweisbar sind, und wobei mindestens ein Parameterwertsatz für eines der parametrisierbaren Modelle bereitgestellt ist, um das Verhalten eines realen, die Funktion eines der logischen Bauelemente (26) erfüllenden Bauelements mit dem parametrisierbaren Modell und dem Parameterwertsatz zu beschreiben, und
bei dem
ein logisches Fahrzeugmodell der zu simulierenden Kraftfahrzeugelektrik bereitgestellt wird, in dem in der zu simulierenden Kraftfahrzeugelektrik enthaltene logische Bauelemente (26) enthalten und entsprechend ihren Verknüpfungen und Anschlüssen einander zugeordnet sind,
für jedes logische Bauelement (26) des logischen Fahrzeugmodells ein in der entsprechenden Menge der verfügbaren Modelle enthaltenes, einem realen Bauelement entsprechendes parametrisierbares Modell und ein entsprechender Parameterwertsatz oder ein in der entsprechenden Menge der Modelle enthaltenes bauelementspezifisches Modell zur Beschreibung des realen, die Funktion des logischen Bauelements (26) erfüllenden Bauelements bestimmt wird, unter Verwendung der Zuordnung der Anschlüsse der logischen Bauelemente (26) des logischen Fahrzeugmodells zueinander, der bestimmten parametrisierbaren Modelle und der bestimmten Parameterwertsätze und/ oder der bestimmten bauelementspezifischen Modelle ein Gesamtmodell der Kraftfahrzeugelektrik erstellt wird, und
für das Gesamtmodell für ein gegebenes Simulationsprogramm Eingabe- und/oder Steuerdateien erstellt werden.

2. Verfahren nach Anspruch 1,
**dadurch gekennzeichnet,**
**daß** das logische Fahrzeugmodell durch Angabe von logischen Bauelementen (26) und ihren Verknüpfungen bereitgestellt wird.

3. Verfahren nach Anspruch 2,
**dadurch gekennzeichnet,**
**daß** zur Angabe mindestens eines in der zu simulierenden Kraftfahrzeugelektrik enthaltenen logischen Bauelements (26) eine Liste der verfügbaren logischen Bauelemente wenigstens teilweise auf einem Bildschirm (12) eines zur Durchführung des Verfahrens benutzten Datenverarbeitungssystems (10, 12, 14, 16, 18, 20, 22, 24) angezeigt und eine Auswahl eines Benutzers eingelesen wird.

4. Verfahren nach Anspruch 2 oder 3,
**dadurch gekennzeichnet,**
**daß** zur Angabe wenigstens eines logischen Bauelements (26) entsprechende Daten aus einer Datei (18) eingelesen werden.

5. Verfahren nach einem der vorhergehenden Ansprüche,
**dadurch gekennzeichnet,**
**daß** das logische Fahrzeugmodell aus einer Datei eingelesen wird.

6. Verfahren nach einem der vorhergehenden Ansprüche,
**dadurch gekennzeichnet,**
**daß** mindestens einem logischen Bauelement (26) eine Standardbezeichnung und/oder ein Symbol zugeordnet ist und die Angabe des logischen Bauelements (26) bei der Erstellung des logischen Fahrzeugmodells und/oder die Kennzeichnung in dem logischen Fahrzeugmodell über die Standardbezeichnung oder das Symbol erfolgt.

7. Verfahren nach einem der vorhergehenden Ansprüche,
**dadurch gekennzeichnet,**
**daß** mindestens einem logischen Bauelement (26) des logischen Fahrzeugmodells mindestens zwei Modelle aus der Menge der verfügbaren Modelle zugewiesen werden, und in einem späteren Schritt aus der Menge der zugewiesenen Modelle ein Modell bestimmt wird.

8. Verfahren nach einem der vorhergehenden Ansprüche,
**dadurch gekennzeichnet,**
**daß** zur Bestimmung oder Zuweisung eines Modells mindestens eines logischen Bauelements (26) in dem logischen Fahrzeugmodell eine Liste der für dieses logische Bauelement verfügbaren Modelle wenigstens teilweise angezeigt und eine Auswahl eines Benutzers eingelesen wird.

9. Verfahren nach einem der vorhergehenden Ansprüche,
**dadurch gekennzeichnet,**
**daß** zur Bestimmung oder Zuweisung wenigstens eines Modells mindestens eines logischen Bauelements (26) in dem logischen Fahrzeugmodell Daten aus einer Datei eingelesen werden.

10. Verfahren nach einem der vorhergehenden Ansprüche,
**dadurch gekennzeichnet,**
**daß** mindestens einem Modell eine Standardbezeichnung und/oder ein Symbol zugeordnet ist und die Zuweisung oder Bestimmung des Modells über die Standardbezeichnung oder das Symbol erfolgt.

11. Verfahren nach einem der vorhergehenden Ansprüche,
**dadurch gekennzeichnet,**
**daß** bei der Zuweisung oder Bestimmung der Modelle ein Simulationstyp und/oder der Typ des Simulationsprogramms berücksichtigt wird.

12. Verfahren nach einem der vorhergehenden Ansprüche,
**dadurch gekennzeichnet,**
**daß** Zuweisung oder die Bestimmung eines Modells für ein bestimmtes logisches Bauelement (26) automatisch erfolgt.

13. Verfahren nach Anspruch 7 oder einem der Ansprüche 8 bis 12 und 7,
**dadurch gekennzeichnet,**
**daß** jedem zugewiesenen oder bestimmten parametrisierbaren Modell mindestens ein Parameterwertsatz zugewiesen wird.

14. Verfahren nach einem der vorhergehenden Ansprüche,
**dadurch gekennzeichnet,**
**daß** zur Bestimmung oder Zuweisung eines Parameterwertsatzes eine Liste der verfügbaren Parameterwertsätze wenigstens teilweise angezeigt und eine Auswahl eines Benutzers eingelesen wird.

15. Verfahren nach einem der vorhergehenden Ansprüche,
**dadurch gekennzeichnet,**
**daß** zur Bestimmung oder Zuweisung wenigstens eines Parameterwertsatzes Daten aus einer Datei eingelesen werden.

16. Verfahren nach einem der vorhergehenden Ansprüche,
**dadurch gekennzeichnet,**
**daß** jedem der Parameterwertsätze mindestens ein Attribut zugeordnet ist, das zur Zuweisung oder Bestimmung des Parameterwertsatzes verwendet wird.

17. Verfahren nach Anspruch 16,
**dadurch gekennzeichnet,**
**daß** jedem logischen Bauelement eine Bezeichnung zugeordnet ist, die als Attribut verwendet wird.

18. Verfahren nach Anspruch 16 oder 17,
**dadurch gekennzeichnet,**
**daß** jedem parametrisierbaren Modell eine Bezeichnung zugeordnet ist, die als Attribut verwendet wird.

19. Verfahren nach einem der Ansprüche 16 bis 18,
**dadurch gekennzeichnet,**
**daß** als Attribut eine Bezeichnung eines realen, die Funktion des logischen Bauelements erfüllenden Bauelements verwendet wird, die zur Bestimmung des Parameterwertsatzes eingelesen wird.

20. Verfahren nach einem der Ansprüche 16 bis 19,
**dadurch gekennzeichnet,**
**daß** als Attribut die Bezeichnung eines Simulationsprogramms und/oder eines Simulationstyps verwendet wird.

21. Verfahren nach einem der Ansprüche 13 bis 20,
**dadurch gekennzeichnet,**
**daß** für mindestens ein logisches Bauelement und ein entsprechendes, parametrisierbares Modell ein Default-Parameterwertsatz vorgegeben ist, der automatisch zugewiesen oder bestimmt wird, wenn keine andere Zuweisung oder Bestimmung erfolgt.

22. Verfahren nach einem der Ansprüche 16 bis 21,
**dadurch gekennzeichnet,**
**daß** ein Parameterwertsatz automatisch unter Verwendung mehrerer Attribute bestimmt wird.

23. Verfahren nach Anspruch 22,
**dadurch gekennzeichnet,**
**daß** in dem Fall, daß kein Parameterwertsatz gefunden wird, ein bauelementspezifisches Modell verwendet wird.

24. Verfahren nach einem der vorhergehenden Ansprüche,
**dadurch gekennzeichnet,**
**daß** jedem bauelementspezifischen Modell mindestens ein Attribut zugeordnet ist, das zur Zuweisung oder Bestimmung des Modells verwendet wird.

25. Verfahren nach Anspruch 24,
**dadurch gekennzeichnet,**
**daß** jedem logischen Bauelement (26) eine Bezeichnung zugeordnet ist, die als Attribut verwendet wird.

26. Verfahren nach Anspruch 24 oder 25,
**dadurch gekennzeichnet,**
**daß** als Attribut eine Bezeichnung eines realen, durch das bauelementspezifische Modell zu beschreibenden Bauelements verwendet wird.

27. Verfahren nach einem der Ansprüche 24 bis 26,
**dadurch gekennzeichnet,**
**daß** als Attribut die Bezeichnung eines Simulationsprogramms und/oder eines Simulationstyps verwendet wird.

28. Verfahren nach einem der vorhergehenden Ansprüche,
**dadurch gekennzeichnet,**
**daß** für mindestens ein logisches Bauelement (26) ein bauelementspezifisches Default-Modell vorgegeben ist, das automatisch bestimmt wird, wenn keine andere Bestimmung erfolgt.

29. Verfahren nach einem der vorhergehenden Ansprüche,
**dadurch gekennzeichnet,**
**daß** in dem Fall, daß parametrisierbare Modelle mit entsprechenden Parameterwertsätzen als auch bauelementspezifische Modelle verfügbar sind, ein bauelementspezifisches Modell zugewiesen und/oder bestimmt wird.

30. Verfahren nach einem der Ansprüche 24 bis 29,
**dadurch gekennzeichnet,**
**daß** ein bauelementspezifisches Modell automatisch unter Verwendung mehrerer Attribute bestimmt wird.

31. Verfahren nach einem der vorhergehenden Ansprüche,
**dadurch gekennzeichnet,**
**daß** wenigstens einem der logischen Bauelemente (26) mindestens zwei logische Bauteilzustände zugeordnet sind, die jeweils einem Betriebszustand des logischen Bauelements entsprechen,
**daß** nach Bestimmung dieses logischen Bauelements dessen logischer Bauteilzustand bestimmt wird, und
**daß** bei Bestimmung des Modells ein dem logischen Betriebszustand entsprechendes bauelementspezifisches Modell oder ein parametrisierbares Modell und ein dem logischen Betriebszustand entsprechender Parameterwertsatz für das bestimmte parametrisierbare Modell bestimmt wird.

32. Verfahren nach Anspruch 31,
**dadurch gekennzeichnet,**
**daß** zunächst zur Bestimmung des logischen Bauteilzustands und des Modells für das bestimmte logische Bauelement (26) dem logischen Bauelement (26) logische Bauteilzustände und Modelle zugewiesen werden, wobei für jeden der logischen Bauteilzustände mindestens ein dem logischen Bauteilzustand entsprechendes bauelementspezifisches Modell oder mindestens eine parametrisierbares Modell und für das parametrisierbare Modell mindestens ein dem logischen Betriebszustand entsprechender Parameterwertsatz zugewiesen werden,
und in einem späteren Schritt einer der logischen Bauteilzustände bestimmt und auf dieser Basis aus den zugewiesen Modellen und Parameterwertsätzen ein bauelementspezifisches Modell oder ein parametrisierbares Modell und ein entsprechender Parameterwertsatz ausgewählt werden.

33. Verfahren nach Anspruch 31 oder 32,
**dadurch gekennzeichnet,**
**daß** für mindestens ein logisches Bauelement ein logischer Default-Bauteilzustand vorgegeben ist, der automatisch bestimmt oder zugewiesen wird, wenn keine andere Bestimmung erfolgt.

34. Verfahren nach einem der Ansprüche 31 bis 33 und einem der Ansprüche 16 bis 30,
**dadurch gekennzeichnet,**
**daß** einem logischen Bauteilzustand eine Bezeichnung zugeordnet ist, die als Attribut für einen Parameterwertsatz und/oder ein bauelementspezifisches Modell verwendet wird.

35. Verfahren nach Anspruch 32 oder Anspruch 33 oder 34 und Anspruch 32,
**dadurch gekennzeichnet,**
**daß** für jedes der logischen Bauelemente (26) des logischen Fahrzeugmodells für alle zugewiesenen logischen Bauteilzustände geprüft wird, ob mindestens ein bauelementspezifisches Modell oder ein parametrisierbares Modell und ein entsprechender Parameterwertsatz definiert sind.

36. Verfahren nach einem der Ansprüche 31 bis 35,
**dadurch gekennzeichnet,**
**daß** logische Funktionszustände definiert sind, die einem Betriebszustand mindestens einer Gruppe zusammenwirkender logischer Bauelemente (26) des logischen Fahrzeugmodells entsprechen und denen entsprechende logische Bauelemente (26) und logische Bauteilzustände zugeordnet sind,
**daß** nach Bereitstellung des Fahrzeugmodells einer der logischen Funktionszustände bestimmt wird, und
**daß** nach Bestimmung des logischen Funktionszustands die entsprechenden logischen Bauteilzustände der zugehörigen logischen Bauelemente bestimmt werden.

37. Verfahren nach Anspruch 36,
**dadurch gekennzeichnet,**
**daß** für alle bestimmten logischen Funktionszustände geprüft wird, ob die entsprechenden bestimmten logischen Bauteilzustände miteinander vereinbar sind.

38. Verfahren nach einem der Ansprüche 36 oder 37,
**dadurch gekennzeichnet,**
**daß** zur Bestimmung der logischen Funktionszustände entsprechende Daten aus einer Datei eingelesen werden.

39. Verfahren nach Anspruch 7 oder einem der Ansprüche 8 bis 38 und Anspruch 7,
**dadurch gekennzeichnet,**
**daß** vor der Bestimmung der Modelle eine Bezeichnung eines Simulationstyps und/oder eines Simulationsprogramms eingelesen werden.

40. Verfahren nach einem der Ansprüche 36 bis 39,
**dadurch gekennzeichnet,**
**daß** für eine Kraftfahrzeugelektrik automatisch entsprechend benutzerdefinierter Regeln mindestens ein Simulationsszenarium erstellt wird, das jeweils eine Kombination logischer Funktionszustände der zu simulierenden Kraftfahrzeugelektrik umfaßt, und
**daß** entsprechend der Simulationsszenarien eine Bestimmung von parametrisierbaren Modellen und Parameterwertsätzen und/oder bauelementspezifischen Modellen erfolgt.

41. Verfahren nach einem der vorhergehenden Ansprüche,
**dadurch gekennzeichnet,**
**daß** die Zuweisung oder Bestimmung von logischen Bauelementen, Modellen, Parameterwertsätzen, logischen Bauteilzuständen und/oder logischen Funktionszuständen über eine graphische Benutzerschnittstelle erfolgt.

42. Verfahren nach Anspruch 41,
**dadurch gekennzeichnet,**
**daß** ein logisches Bauelement durch ein diesem logischen Bauelement zugeordnetes Symbol auf einem Bildschirm des Computersystems dargestellt wird, und bei Auswahl des Symbols mittels eines Eingabegeräts des Computersystems Eingabe-, Bearbeitungs- und/oder Anzeigemasken für Daten zu diesem logischen Bauelement angezeigt und gegebenenfalls entsprechende Daten eingelesen werden.

43. Verfahren nach Anspruch 42,
**dadurch gekennzeichnet,**
**daß** zum Aufbau und/oder zur Änderung der Daten für die Simulation die zu simulierende Kraftfahrzeugelektrik in Form von zwei Baumstrukturen von Zweipolen angezeigt wird, wobei die Wurzel des ersten Baums dem Pluspol und die Wurzel des zweiten Baums dem Minuspol einer Stromquelle entspricht, und die Zweige der Bäume jeweils in Anschlüssen von logischen Bauelementen enden, die dem Plus- bzw. Minuspol der logischen Bauelemente entsprechen.

44. Verfahren nach Anspruch 43,
**dadurch gekennzeichnet,**
**daß** zur Darstellung oder zum Verdecken eines Zweiges unterhalb eines auf einem Bildschirm des Computersystems dargestellten Verzweigungspunkts (44) der Verzweigungspunkt mittels entsprechender Eingabegeräte (16) ausgewählt wird.

45. Verfahren nach einem der vorhergehenden Ansprüche,
**dadurch gekennzeichnet,**
**daß** die Parameterwertsätze und/oder die Modelle in einer Datenbank (18, 20) oder verschiedenen Datenbanken abgelegt sind, und daß bestimmte Parameterwertsätze und/oder Modelle zur Erstellung der Eingabe- und/oder Steuerdateien aus der Datenbank ausgelesen werden.

46. Verfahren nach einem der vorhergehenden Ansprüche,
**dadurch gekennzeichnet,**
**daß** bei schreibendem Zugriff auf die Datenbank (18, 20, 22) oder eine der verschiedenen Datenbanken geprüft wird, ob der Benutzer eine Schreibberechtigung hat.

47. Verfahren nach einem der vorhergehenden Ansprüche,
**dadurch gekennzeichnet,**
**daß** nach dem Schreiben der Eingabe- und/oder Steuerdateien das entsprechende Simulationsprogramm zur Durchführung der Simulation unter Verwendung der erstellten Dateien gestartet wird,
**daß** nach Ende der Simulation die Ausgabedateien des Simulationsprogramms, in denen die Resultate der Simulation gespeichert sind, eingelesen und die aus der Simulation hervorgegangenen Daten analysiert werden, und
**daß** basierend auf der Analyse Berichte automatisch erstellt und angezeigt werden.

48. Computerprogramm mit Programmcode-Mitteln, um das Verfahren nach einem der Ansprüche 1 bis 47 durchzuführen, wenn das Programm auf einem Computer ausgeführt wird.

49. Computerprogrammprodukt mit Programmcode-Mitteln, die auf einem computerlesbaren Datenträger gespeichert sind, um das Verfahren nach einem der Ansprüche 1 bis 47 durchzuführen, wenn das Computerprogrammprodukt auf einem Computer ausgeführt wird.

50. Datenverarbeitungssystem mit einem Eingabegerät (14, 16) zur Eingabe von Daten, einem Bildschirm (12) zur Anzeige von Informationen und einer Speichereinrichtung (24), in der ein Programm zur Ausführung des Verfahren nach einem der Ansprüche 1 bis 47 und mindestens eine Datenbank (20) mit Parameterwertsätzen gespeichert ist.

## Claims

1. A method for the preparation of a computer simulation of a motor vehicle electrical system using a simulation program,
wherein
logic components (26) are defined which represent components of a motor vehicle electrical system defined by a pre-set function, which have a pre-set number of connections and with each of which a set of available models is associated which includes at least one parameterizable model and/or one component-specific model for the description of the behavior of a real component fulfilling the function of the logic component (26), with each of the parameterizable models having model parameters to which values can be assigned, and
with at least one parameter value set being provided for one of the parameterizable models in order to describe the behavior of a real component fulfilling the function of one of the logic components (26) with the parameterizable model and the parameter value set; and
wherein a logical vehicle model of the motor vehicle electrical system to be simulated is made available in which logic components (26) included in the motor vehicle electrical system to be simulated are contained and are mutually associated in accordance with their links and connections,
a parameterizable model contained in the corresponding set of available models and corresponding to a real component and a corresponding parameter value set or a component-specific model contained in the corresponding set of models is designated for each logic component (26) of the logical vehicle model in order to describe the real component fulfilling the function of the logic component (26),
an overall model of the motor vehicle electrical system is prepared using the mutual association of the connections of the logic components (26) of the logical vehicle model, the designated parameterizable models and the designated parameter value sets and/or the designated component-specific models, and
input files and/or control files are prepared for the overall model for a given simulation program.

2. A method in accordance with claim 1, **characterized in that** the logical vehicle model is made available by specifying logic components (26) and their links.

3. A method in accordance with claim 2, **characterized in that** a list of the available logic components is displayed at least in part on a monitor (12) of a data processing system (10, 12, 14, 16, 18, 20, 22, 24) used for the carrying out of the method for the specifying of at least one logic component (26) contained in the motor vehicle electrical system to be simulated and a selection of a user is read in.

4. A method in accordance with claim 2 or claim 3, **characterized in that** corresponding data are read from a file (18) to specify at least one logic component (26).

5. A method in accordance with any one of the preceding claims, **characterized in that** the logical vehicle model is read from a file.

6. A method in accordance with any one of the preceding claims, **characterized in that** a standard name and/or a symbol is associated with at least one logic component (26) and the specifying of the logic component (26) takes place on the preparation of the logical vehicle model and/or the designation in the logical vehicle model takes place via the standard name or the symbol.

7. A method in accordance with any one of the preceding claims, **characterized in that** at least two models from the set of available models are assigned to at least one logic component (26) of the logical vehicle model and, in a later step, one model is designated from the set of assigned models.

8. A method in accordance with any one of the preceding claims, **characterized in that**, for the designation or assignment of a model of at least one logic component (26) in the logical vehicle model, a list of the models available for this logic component is at least partly displayed and a selection of a user is read in.

9. A method in accordance with any one of the preceding claims, **characterized in that** data are read from a file for the designation or assignment of at least one model of at least one logic component (26) in the logical vehicle model.

10. A method in accordance with any one of the preceding claims, **characterized in that** a standard name and/or a symbol is associated with at least one model and the assignment or designation of the model takes place via the standard name or via the symbol.

11. A method in accordance with any one of the preceding claims, **characterized in that** a simulation type and/or the type of the simulation program is taken into account in the assignment or designation of the models.

12. A method in accordance with any one of the preceding claims, **characterized in that** the assignment or the designation of a model for a designation logic component (26) takes place automatically.

13. A method in accordance with claim 7 or any one of claims 8 to 12 and 7, **characterized in that** at last one parameter value set is assigned to each assigned or designated parameterizable model.

14. A method in accordance with any one of the preceding claims, **characterized in that** a list of the available parameter value sets is displayed at least in part and a selection of a user is read in for the designation or assignment of a parameter value set.

15. A method in accordance with any one of the preceding claims, **characterized in that** data are read from a file for the designation or assignment of at least one parameter value set.

16. A method in accordance with any one of the preceding claims, **characterized in that** at least one attribute is assigned to each of the parameter value sets and is used for the assignment or designation of the parameter value set.

17. A method in accordance with claim 16, **characterized in that** a name is associated with each logic component and is used as an attribute.

18. A method in accordance with claim 16 or claim 17, **characterized in that** a name is associated with each parameterizable model and is used as an attribute.

19. A method in accordance with any one of the claims 16 to 18, **characterized in that** a name of a real component fulfilling the function of the logic component is used as the attribute and is read in for the designation of the parameter value set.

20. A method in accordance with any one of the claims 16 to 19, **characterized in that** the name of a simulation program and/or of a simulation type is used as the attribute.

21. A method in accordance with any one of the claims 13 to 20, **characterized in that** a default parameter value set, which is automatically assigned or designated when no other assignment or determination takes place, is pre-set for at least one logic component and a corresponding parameterizable model.

22. A method in accordance with any one of the claims 16 to 21, **characterized in that** a parameter value set is automatically designated using a plurality of attributes.

23. A method in accordance with claim 22, **characterized in that** a component-specific model is used in the event that no parameter value set is found.

24. A method in accordance with any one of the preceding claims, **characterized in that** at least one attribute is associated with each component-specific model and is used for the assignment or designation of the model.

25. A method in accordance with claim 24, **characterized in that** a name is associated with each logic component (26) and is used as the attribute.

26. A method in accordance with claim 24 or claim 25, **characterized in that** a name of a real component to be described by the component-specific model is used as the attribute.

27. A method in accordance with any one of the claims 24 to 26, **characterized in that** the name of a simulation program and/or of a simulation type is used as the attribute.

28. A method in accordance with any one of the preceding claims, **characterized in that** a component-specific default model is pre-set for at least one logic component (26) and is designated automatically if no other designation takes place.

29. A method in accordance with any one of the preceding claims, **characterized in that** a component-specific model is assigned and/or designated in the event that parameterizable models with corresponding parameter value sets and also component-specific models are available.

30. A method in accordance with any one of the claims 24 to 29, **characterized in that** a component-specific model is automatically designated using a plurality of attributes.

31. A method in accordance with any one of the preceding claims, **characterized in that** at least two logic component states are associated with at least one of the logic components (26) and each corresponds to an operating state of the logic component;
**in that** after the designation of this logic component its logic component state is designated; and
**in that**, on the designation of the model, a component-specific model corresponding to the logical operating state or a parameterizable model and a parameter value set corresponding to the logical operating state is designated for the designated parameterizable model.

32. A method in accordance with claim 31, **characterized in that** first, logic component states and models are assigned to the logic component (26) for the designation of the logic component state and of the model for the designated logic component (26), with at least one component-specific model corresponding to the logic component state, or at least one parameterizable model and, for the parameterizable model, at least one parameter value set corresponding to the logical operating state being assigned for each of the logic component states,
and **in that**, in a later step, one of the logic component states is designated and, on this basis, a component-specific model or a parameterizable model and a corresponding parameter value set are selected from the assigned models and parameter value sets.

33. A method in accordance with claim 31 or claim 32, **characterized in that** a logical default component state is pre-set for at least one logic component and is designated or assigned automatically if no other designation takes place.

34. A method in accordance with any one of the claims 31 to 33 and any one of the claims 16 to 30, **characterized in that** a name is associated with a logic component state and is used as the attribute for a parameter value set and/or a component-specific model.

35. A method in accordance with claim 32 or claim 33 or 34 and claim 32 **characterized in that** a check is made for each of the logic components (26) of the logical vehicle model for all assigned logic component-states whether at least one component-specific model or a parameterizable model and a corresponding parameter value set are defined.

36. A method in accordance with any one of the claims 31 to 35, **characterized in that** logical function states are defined which correspond to an operating state of at least one group of cooperating logic components (26) of the logical vehicle model and with which corresponding logic components (26) and logic component states are associated;
**in that** one of the logical functional states is designated after the making available of the vehicle model; and
**in that** the corresponding logic component states of the relevant logic components are designated after the designation of the logical function state.

37. A method in accordance with claim 36, **characterized in that** it is checked for all designated logical function states whether the corresponding designated logic component states are mutually compatible.

38. A method in accordance with any one of the claims 36 or 37, **characterized in that** appropriate data are read from a file for the designation of the logical function states.

39. A method in accordance with claim 7 or any one of the claims 8 to 38 and claim 7, **characterized in that** a name of a simulation type and/or of a simulation program are read in before the designation of the models.

40. A method in accordance with any one of the claims 36 to 39, **characterized in that** at least one simulation scenario is prepared automatically in accordance with user-defined rules for a motor vehicle electrical system and in each case includes a combination of logical function states of the motor vehicle electrical system to be simulated; and
**in that** a designation of parameterizable models and of parameter value sets and/or of component-specific models takes place in accordance with the simulation scenarios.

41. A method in accordance with any one of the preceding claims, **characterized in that** the assignment or designation of logic components, models, parameter value sets, logic component states and/ or logical function states takes place via a graphical user interface.

42. A method in accordance with claim 41, **characterized in that** a logic component is represented on a monitor of the computer system by a symbol associated with this logic component and, when the symbol is selected by means of an input device of the computer system, input masks, processing masks and/or display masks are displayed for data relating to this logic component and, optionally, corresponding data are read in.

43. A method in accordance with claim 42, **characterized in that** the motor vehicle electrical system to be simulated is displayed in the form of two tree structures of two-connection networks for the setup and/or for the changing of the data for the simulation, with the root of the first tree corresponding to the positive pole and the root of the second tree corresponding to the negative pole of a power source, and with the branches of the trees each ending in connections of logic components which correspond to the positive pole or the negative pole of the logic components.

44. A method in accordance with claim 43, **characterized in that**, for the presentation or for the hiding of a branch beneath a junction point (44) shown on a monitor of the computer system, the junction point is selected by means of appropriate input devices (16).

45. A method in accordance with any one of the preceding claims, **characterized in that** the parameter value sets and/or the models are stored in a database (18, 20) or in different databases; and
**in that** specified parameter value sets and/or models for the preparation of the input files and/or of the control files are read from the database.

46. A method in accordance with any one of the preceding claims, **characterized in that** for write access to the database (18, 20, 22) or to one of the different databases, it is checked whether the user has write permission.

47. A method in accordance with any one of the preceding claims, **characterized in that** the corresponding simulation program for the carrying out of the simulation using the created files is started after the writing of the input files and/or control files;
**in that** the output files of the simulation program in which the results of the simulation are stored are read after the end of the simulation and the data generated from the simulation are analyzed; and
**in that** reports are automatically prepared and displayed on the basis of the analysis.

48. A computer program with program code means in order to carry out the method in accordance with any one of the claims 1 to 47 when the program is executed on a computer.

49. A computer program product with program code means which are stored on a computer-readable data carrier in order to carry out the method in accordance with any one of the claims 1 to 47 when the computer program product is executed on a computer.

50. A data processing system having an input device (14, 16) for the input of data, a monitor (12) for the display of information and a memory device (24) in which a program for the execution of the method in accordance with any one of the claims 1 to 47 and at least one database (20) with parameter value sets is stored.

## Revendications

1. Procédé pour préparer une simulation par ordinateur d'un système électrique de véhicule automobile moyennant l'utilisation d'un programme de simulation, selon lequel
on définit des composants logiques (26), définis par une fonction prédéterminée, qui présentent des composants d'un système électrique de véhicule automobile, et possèdent un nombre prédéterminé de liens et auxquels est associée respectivement une quantité de modèles disponibles, qui contient au moins un modèle pouvant être paramétrisé et/ou un modèle spécifique au composant pour décrire le comportement d'un composant réel, qui assume la fonction du composant logique (26), chacun de ces modèles pouvant être paramétrisés comportant un modèle de paramètre, dont les valeurs peuvent être affectées, et au moins un ensemble de valeurs de paramètres étant préparées pour l'un des modèles pouvant être paramétrisés, de manière à décrire le comportement de composants réels, qui assument la fonction de l'un des composants logiques (26), avec le modèle pouvant être paramétrisé et l'ensemble de valeurs de paramètres, et
selon lequel
on prépare un modèle logique du véhicule du système électrique de véhicule automobile devant être simulé, dans lequel sont contenus des composants logiques (26) qui sont contenus dans le système électrique du véhicule automobile devant être simulé et sont associés entre eux conformément à leurs combinaisons et à leurs liens,
pour chaque composant logique (26) du modèle logique de véhicule on détermine un modèle pouvant être paramétrisé qui est contenu dans la quantité correspondante des modèles disponibles et correspond à un composant réel, et un ensemble correspondant de valeurs de paramètres ou un modèle spécifique au composant, qui est contenu dans la quantité correspondante des modèles et sert à décrire le composant réel qui assume la fonction du composant logique (26), et on établit un modèle global du système électrique du véhicule automobile en utilisant l'association réciproque des liens des composants logiques (26) du modèle logique du véhicule, des modèles déterminés pouvant être paramétrisés et des ensembles déterminés de valeurs de paramètres et/ou des modèles déterminés spécifiques aux composants,
et
pour le modèle global pour un programme de simulation déterminé on établit des fichiers d'entrée et/ou de commande.

2. Procédé selon la revendication 1, **caractérisé en ce qu'**on prépare le modèle logique du véhicule au moyen de l'indication de composants logiques (26) et de leurs combinaisons.

3. Procédé selon la revendication 2, **caractérisé en ce que** pour indiquer au moins un composant logique (26) contenu dans le système électrique du véhicule automobile devant être simulé, on affiche une liste des composants logiques disponibles au moins en partie sur un écran (12) d'un système (10, 12, 14 , 16, 18, 20, 22, 24) de traitement de données, utilisé pour la mise en oeuvre du procédé, et on introduit une sélection d'un utilisateur.

4. Procédé selon la revendication 2 ou 3, **caractérisé en ce que** pour l'indication d'au moins un composant logique (26) des données correspondantes sont lues à partir d'un fichier (18).

5. Procédé selon l'une des revendications précédentes, **caractérisé en ce que** le modèle logique du véhicule est lu à partir d'un fichier.

6. Procédé selon l'une des revendications précédentes, **caractérisé en ce qu'**une désignation standard et/ou un symbole est associé à au moins un composant logique (26) et, l'indication du composant logique (26) s'effectue lors de l'établissement du modèle logique du véhicule et/ou de la caractérisation dans le modèle logique du véhicule, au moyen de la désignation standard ou du symbole.

7. Procédé selon l'une des revendications précédentes, **caractérisé en ce qu'**au moins deux modèles tirés d'une quantité des modèles disponibles sont affectés au moins à un composant logique (26) du modèle logique du véhicule et qu'un modèle est déterminé, lors d'une étape ultérieure, à partir de la quantité des modèles affectés.

8. Procédé selon l'une des revendications précédentes, **caractérisé en ce que** pour la détermination ou l'affectation d'un modèle d'au moins un composant logique (26) dans le modèle logique de véhicule, une liste pour les modèles disponibles pour ce composant logique est affichée au moins partiellement et une sélection d'un utilisateur est lue.

9. Procédé selon l'une des revendications précédentes, **caractérisé en ce que** pour la détermination ou l'affectation d'au moins un modèle d'au moins un composant logique (26) dans le modèle logique de véhicule des données sont lues à partir d'un fichier.

10. Procédé selon l'une des revendications précédentes, **caractérisé en ce qu'**on affecte une désignation standard et/ou un symbole à au moins un modèle et que l'affectation ou la détermination du modèle s'effectue au moyen de la désignation standard ou du symbole.

11. Procédé selon l'une des revendications précédentes, **caractérisé en ce que** lors de l'affectation ou de la détermination des modèles on prend en compte un type de simulation et/ou le type du programme de simulation.

12. Procédé selon l'une des revendications précédentes, **caractérisé en ce que** l'affectation ou la détermination d'un modèle pour un composant logique déterminé (26) s'effectue de façon automatique.

13. Procédé selon la revendication 7, les revendications 8 à 12 et 7, **caractérisé en ce qu'**au moins un ensemble de valeurs de paramètres est affecté à chaque modèle affecté ou déterminé, pouvant être paramétrisé.

14. Procédé selon l'une des revendications précédentes, **caractérisé en ce que** pour la détermination ou l'affectation d'un ensemble de valeurs de paramètres, une liste des ensembles disponibles de valeurs de paramètres est affichée au moins partiellement et une sélection d'un utilisateur est lue.

15. Procédé selon l'une des revendications précédentes, **caractérisé en ce que** pour la détermination et l'affectation d'au moins un ensemble de valeurs de paramètres on lit des données à partir d'un fichier.

16. Procédé selon l'une des revendications précédentes, **caractérisé en ce qu'**à chacun des ensembles de valeurs de paramètres est associé au moins un attribut qui est utilisé pour l'affectation ou la détermination de l'ensemble de valeurs de paramètres.

17. Procédé selon la revendication 16, **caractérisé en ce qu'**à chaque composant logique est associé une désignation qui est utilisé en tant qu'attribut.

18. Procédé selon la revendication 16 ou 17, **caractérisé en ce qu'**à chaque modèle pouvant être paramétrisé est associé une désignation qui est utilisée en tant qu'attribut.

19. Procédé selon l'une des revendications 16 à 18, **caractérisé en ce qu'**en tant qu'attribut on utilise une désignation d'un composant réel, qui assume la fonction du composant logique et qui est lue pour la détermination de l'ensemble de valeurs de paramètres.

20. Procédé selon l'une des revendications 16 à 19, **caractérisé en ce qu'**on utilise en tant qu'attribut la désignation d'un programme de simulation et/ou d'un type de simulation.

21. Procédé selon l'une des revendications 13 à 20, **caractérisé en ce que** pour au moins un composant logique et un modèle correspondant pouvant être paramétré, on prédétermine un ensemble implicite de valeurs de paramètres, qui est affecté ou déterminé automatiquement lorsqu'aucune autre affectation ou détermination n'est exécutée.

22. Procédé selon l'une des revendications 16 à 21, **caractérisé en ce qu'**on détermine automatiquement un ensemble de valeurs de paramètres moyennant l'utilisation de plusieurs attributs.

23. Procédé selon la revendication 22, **caractérisé en ce que** dans le cas où on ne trouve aucun ensemble de valeurs de paramètres, on utilise un modèle spécifique au composant.

24. Procédé selon l'une des revendications précédentes, **caractérisé en ce qu'**à chaque modèle spécifique au composant on associe au moins un attribut qui est utilisé pour l'affectation ou la détermination du modèle.

25. Procédé selon la revendication 24, **caractérisé en ce qu'**on associe à chaque composant logique (26) une désignation qui est utilisée en tant qu'attribut.

26. Procédé selon la revendication 24 ou 25, **caractérisé en ce qu'**on utilise comme attribut une désignation d'un composant réel devant être décrit par le modèle spécifique au composant.

27. Procédé selon l'une des revendications 24 à 26, **caractérisé en ce qu'**on utilise comme attribut la désignation d'un programme de simulation et/ou d'un type de simulation.

28. Procédé selon l'une des revendications précédentes, **caractérisé en ce que** pour au moins un composant logique (26) on prédétermine un modèle implicite spécifique au composant, qui est déterminé automatiquement lorsqu'aucune autre détermination n'est exécutée.

29. Procédé selon l'une des revendications précédentes, **caractérisé en ce que** dans le cas où on dispose de modèles pouvant être paramétrisés avec des ensembles correspondant de valeurs de paramètres ainsi que des modèles spécifiques aux composants, un modèle spécifique au composant est affecté et/ou déterminé.

30. Procédé selon l'une des revendications 24 à 29, **caractérisé en ce qu'**un modèle spécifique au composant est déterminé automatiquement moyennant l'utilisation de plusieurs attributs.

31. Procédé selon l'une des revendications précédentes, **caractérisé en ce qu'**à au moins l'un des composants logiques (26) sont affectés au moins deux états logiques de composant, qui correspondent respectivement à un état de fonctionnement du composant logique,
qu'après détermination de ce composant logique, on détermine son état logique de composant, et
que lors de la détermination du modèle, on détermine un modèle spécifique au composant, qui correspond à l'état logique de fonctionnement, ou un modèle pouvant être paramétrisé et un ensemble de valeurs de paramètres qui correspond à l'état logique de fonctionnement, pour le modèle déterminé pouvant être paramétrisé.

32. Procédé selon la revendication 31, **caractérisé en ce**
**que** tout d'abord pour la détermination de l'état logique du composant et du modèle pour le composant logique déterminé (26), on affecte au composant logique (26) des états logiques du composant et des modèles, auquel cas pour chacun des états logiques du composant on affecte au moins un modèle spécifique au composant, qui correspond à l'état logique du composant, ou au moins un modèle pouvant être paramétrisé et, pour le modèle pouvant être paramétrisé, au moins un ensemble de valeurs de paramètres qui correspond à l'état de fonctionnement logique, et
lors d'une étape ultérieure, on détermine l'un des états logiques du composant et sur cette base on sélectionne parmi les modèles affectés et des ensembles affectés de valeurs de paramètres un modèle spécifique au composant ou un modèle pouvant être paramétrisé et un ensemble correspondant de valeurs de paramètres.

33. Procédé selon la revendication 31 ou 32, **caractérisé en ce que** pour au moins un composant logique, est prédéterminé un état logique implicite du composant, qui est déterminé ou affecté automatiquement lorsqu'aucune autre détermination n'est exécutée.

34. Procédé selon l'une des revendications 31 à 33 et l'une des revendications 16 à 30, **caractérisé en ce qu'**à un état logique du composant on associe une désignation qui est utilisée en tant qu'attribut pour un ensemble de valeurs de paramètres et/ou un modèle spécifique au composant.

35. Procédé selon la revendication 32 ou la revendication 33 ou 34 et la revendication 32, **caractérisé en ce que** pour chacun des composants logiques (26) du modèle logique de véhicule on teste, pour tous les états logiques affectés des composants, si au moins un modèle spécifique à un composant ou un modèle pouvant être paramétrisé et un ensemble correspondant de valeurs de paramètres sont définis.

36. Procédé selon l'une des revendications 31 à 35, **caractérisé en ce**
**que** des états logiques de fonctionnement sont définis, états qui correspondent à un état de fonctionnement au moins d'un groupe de composants logiques coopérants (26) du modèle logique du véhicule et auxquels sont associés des composants logiques correspondants (26) et des états logiques correspondants des composants,
**qu'**après la préparation du modèle du véhicule, on détermine l'un des états logiques de fonctionnement, et
**qu'**après la détermination de l'état logique de fonctionnement, on détermine les états logiques correspondants des composants des composants logiques associés.

37. Procédé selon la revendication 36, **caractérisé en ce que** pour tous les états logiques déterminés de fonctionnement on vérifie si les états logiques déterminés correspondants des composants peuvent être réunis entre eux.

38. Procédé selon l'une des revendications 36 ou 37, **caractérisé en ce que** pour la détermination des états logiques de fonctionnement, on lit des données correspondantes à partir d'un fichier.

39. Procédé selon la revendication 7 ou l'une des revendications 8 à 38 et la revendication 7, **caractérisé en ce qu'**avant la détermination des modèles, on lit une désignation d'un type de simulation et/ou d'un programme de simulation.

40. Procédé selon l'une des revendications 36 à 39, **caractérisé en ce**
**que** pour un système électrique de véhicule automobile, automatiquement est établi, conformément à des règles définies par l'utilisateur, au moins un scénario de simulation, qui comprend une combinaison d'états de fonctionnement logiques du système électrique du véhicule automobile devant être simulé, et
**qu'**une détermination de modèles pouvant être paramétrisés et d'ensembles de valeurs de paramètres et/ou de modèles spécifiques aux composants s'effectue conformément aux scénarios de simulation.

41. Procédé selon l'une des revendications précédentes, **caractérisé en ce que** l'affectation ou la détermination de composants logiques, de modèles, d'ensembles de valeurs de paramètres, d'états logiques de composants et/ou d'états logiques de fonctionnement s'effectue au moyen d'une interface graphique d'utilisateur.

42. Procédé selon la revendication 41, **caractérisé en ce qu'**un composant logique est représenté par un symbole associé à ce composant logique, sur un écran du système d'ordinateur et que lors de la sélection du symbole au moyen d'un appareil de lecture du système d'ordinateur, des masques d'entrée, de travail et/ou d'affichage sont affichés pour des données concernant ce composant logique et éventuellement les données correspondantes sont lues.

43. Procédé selon la revendication 42, **caractérisé en ce que** pour l'établissement et/ou la modification des données pour la simulation, le système électrique du véhicule automobile à simuler est affiché sous la forme de deux structures en forme d'arbres de dipôles, les racines du premier arbre correspondant au pôle positif et les racines du second arbre correspondant au pôle négatif d'une source de courant, et les branches des deux arbres se terminant respectivement au niveau de liens de composants logiques qui correspondent aux pôle positif et au pôle négatif des composants logiques.

44. Procédé selon la revendication 43, **caractérisé en ce que** pour la représentation ou le masquage d'une branche au-dessous d'un point de ramification (44) représenté sur un écran du système d'ordinateur, on sélectionne le point de ramification à l'aide d'appareils d'entrée correspondants (16).

45. Procédé selon l'une des revendications précédentes, **caractérisé en ce que** les ensembles de valeurs de paramètres et/ou les modèles sont placés dans une banque de données (18, 20) ou dans différentes banques de données et que des ensembles déterminés de valeurs de paramètres et/ou des modèles déterminés pour l'établissement des fichiers d'entrée et/ou des fichiers de commande sont lus à partir de la banque de données.

46. Procédé selon l'une des revendications précédentes, **caractérisé en ce que** dans le cas d'un accès d'écriture à la banque de données (18, 20, 22) ou de l'une des différentes banques de données, on vérifie si l'utilisateur a une autorisation d'écriture.

47. Procédé selon l'une des revendications précédentes, **caractérisé en ce**
**qu'**après l'écriture des fichiers d'entrée et/ou de commande, le programme correspondant de simulation démarre pour la mise en oeuvre de la simulation moyennant l'utilisation des fichiers établis,
**qu'**à la fin de la simulation, les fichiers de sortie du programme de simulation, dans lesquels sont mémorisés les résultats de la simulation, sont lus et que les données provenant de la simulation sont analysées, et
**que** des rapports sont établis et affichés automatiquement sur la base de l'analyse.

48. Programme informatique comportant des moyens à code de programme pour la mise en oeuvre du procédé selon l'une des revendications 1 à 47, lorsque le programme est exécuté sur un ordinateur.

49. Produit de programme informatique comportant des moyens à code de programme, qui sont mémorisés sur un support de données lisible par ordinateur, pour la mise en oeuvre du procédé selon l'une des revendications 1 à 47, lorsque le produit de programme informatique est mis en oeuvre dans un ordinateur.

50. Système de traitement de données comportant un appareil d'entrée (14, 16) pour l'entrée de données, un écran (12) pour l'affichage d'informations et un dispositif de mémoire (24), dans lequel un programme est mémorisé pour la mise en oeuvre du procédé selon l'une des revendications 1 à 47, et au moins une banque de données (20) comportant des ensembles de valeurs de paramètres.
